# EUROPÄISCHE PATENTANMELDUNG

(11) **EP 4 752 387 A1**
(43) Veröffentlichungstag der Anmeldung: **03.06.2026**
(21) Anmeldenummer: 25218189.6
(22) Anmeldetag: 25.11.2025
(51) Int. Cl.: F16C 25/06, F16C 19/54, F16C 35/067, F16C 43/04, F16C 29/12

(54) **VORRICHTUNGEN ZUR EINSTELLUNG EINES LAGERSPIELS VON KOAXIAL DREHBAR ZUEINAN-DER GELAGERTEN BAUTEILEN; VERFAHREN ZUR EINSTELLUNG EINES LAGERSPIELS VON KOAXIAL DREHBAR ZUEINANDER GELAGERTEN BAUTEILEN**

(30) Priorität: 29.11.2024 DE 102024135476
(71) Anmelder: HWG Horst Weidner GmbH, 71272 Renningen (DE)
(72) Erfinder: Breitfeld, Sven, 71134 Aidlingen (DE); Weidner, Frank, 70839 Gerlingen (DE)
(74) Vertreter: Patentanwälte Schuster, Müller & Partner mbB

(57) **Zusammenfassung**

Es werden Vorrichtungen zur Einstellung eines Lagerspiels von koaxial drehbar zueinander gelagerten Bauteilen und Verfahren zur Einstellung eines Lagerspiels von koaxial drehbar zueinander gelagerten Bauteilen, vorgeschlagen, wobei die Vorrichtung insbesondere ein erstes Teil (1) und ein zweite Teil (2) aufweist, wobei nach mechanischer Einstellung des Lagerspiels durch eine Bedienperson aufgrund einer bei der Einstellung vorgesehenen Vorspannung eine gegenseitige relative radiale Verdrehung des ersten Teils (1) und des zweiten Teils (2) bewirkt wird, dass sich der zweite Teil (2) axial bewegen kann oder die Vorrichtung insbesondere eine Feder-Mutter (46) und einen Druckring (52) aufweist, wobei nach mechanischer Einstellung des Lagerspiels durch eine Bedienperson aufgrund einer bei der Einstellung vorgesehenen Vorspannung eine gegenseitige relative radiale Verdrehung der Feder-Mutter (46) und des Druckrings (52) bewirkt wird, dass sich der Druckring (52) axial bewegen kann

## Beschreibung

### Stand der Technik

Die Erfindung geht aus von einer Vorrichtung zur Einstellung eines Lagerspiels von koaxial drehbar zueinander gelagerten Bauteilen, nach der Gattung des Anspruchs 1, einem Verfahren zur Einstellung eines Lagerspiels von koaxial drehbar zueinander gelagerten Bauteilen, nach der Gattung des Anspruchs 10, einer Vorrichtung zur Einstellung eines Lagerspiels von koaxial drehbar zueinander gelagerten Bauteilen, nach der Gattung des Anspruchs 13, einem Verfahren zur Einstellung eines Lagerspiels von koaxial drehbar zueinander gelagerten Bauteilen, nach der Gattung des Anspruchs 17.

Vorrichtungen zur Einstellung von Lagerspielen sind seit langem Stand der Technik. Dabei handelt es sich in der Regel um eine Einzelanstellung über den Vorspannweg. Mit Hilfe tolerierter Passscheiben, Zwischen- oder Abstandsringen kann die gewünschte Vorspannkraft eingestellt werden. Diese Spieleinstellung ist verhältnismäßig aufwändig, da zur Auswahl der geeigneten Passscheibe oder Ringe das Lagerspiel zuvor ausgemessen werden muss. Ohne ein Ausmessen des Lagerspiels ist nur ein Probieren mit unterschiedlichen Passscheiben oder Ringen möglich, was aber unter Umständen sehr zeitaufwändig ist, da zum Wechsel der Passscheiben oder Ringe das Bauteil samt Lager aus der Halterung oder dem Gehäuse, in der bzw. in dem es gelagert ist, herausgenommen werden muss.

Bekannt ist auch die Erzeugung der Anstellkraft auf direktem Weg, beispielsweise über eine gekonterte Stellmutter oder einen gekonterten Konus. Dabei wird die Stellmutter gegen den feststehenden Ring des Wälzlagers oder der Konus gegen die Wälzkörper gedrückt und in der Stellung mit einer Kontermutter arretiert. Hierzu sind immer zwei Werkzeuge erforderlich. Außerdem kann beim Anziehen der Kontermutter die Stellmutter oder der Konus wieder minimal aus seiner eingestellten Position herausgedreht werden, wodurch sich das Spiel wieder verändert, so dass ein Nachjustieren erforderlich wird. Nachteilig ist auch, dass zuerst immer das Lagerspiel eingestellt werden muss, bevor die Bauteile in dem Gehäuse, dem Gestell, der Gabel oder dem Rahmen befestigt werden. Umgekehrt ist zu Veränderung des Spiels immer zuvor das Lockern der Befestigung der Bauteile erforderlich.

Weitere Vorrichtungen zur Einstellung von Lagerspielen sind aus der DE 10 2005 022 808 A1, der DE 199 40 969 A1, der US 2017/0254361 A1, der US 4,531,756 A, der US 4,573,698 A und der JP S58 - 132765 U bekannt.

Aus der WO 2016/029896 A1 sind zudem ein mit einem Wälzlager in Wirkverbindung stehende Ring (Schraubring) und ein mit einem Widerlager in Wirkverbindung stehender Ring (Druckring) bekannt, wobei beide Ringe um eine Drehachse gegeneinander drehbar gelagert sind und eine Kontaktfläche zur gegenseitigen Anlage der beiden Ringe aufweisen, die in einer Drehrichtung des mit dem Wälzlager in Wirkverbindung stehenden Rings gegen den mit dem Widerlager in Wirkverbindung stehenden Ring eine axiale Steigung aufweist, so dass durch Drehung der beiden Ringe relativ zueinander die axiale Gesamtbauhöhe der beiden an der Kontaktfläche aneinander liegenden Ringe veränderbar ist, und die beiden Ringe bei ihrer Relativbewegung um die Drehachse entlang ihrer Kontaktfläche über einen Verstellwinkel in verschiedenen Winkelpositionen aneinander arretierbar sind, wobei die Arretierung lösbar ist. Vorteilhaft ist hierbei, dass die Spieleinstellung nicht nur in einem vormontierten Zustand, sondern bei funktionsbereiter, d.h. gebrauchsfertiger bzw. fahrbereiter Anordnung aller Bauteile möglich ist. Nachteilig ist aber, dass die Vorrichtung ein hohes Gewicht aufweist.

Der Erfindung liegt daher die Aufgabe zugrunde, eine die Nachteile des Standes der Technik überwindende Vorrichtung zur Einstellung eines Lagerspiels von koaxial drehbar zueinander gelagerten Bauteilen und ein die Nachteile des Standes der Technik überwindendes Verfahren zur Einstellung eines Lagerspiels von koaxial drehbar zueinander gelagerten Bauteilen bereitzustellen.

### Die Erfindung und ihre Vorteile

Die erfindungsgemäße Vorrichtung zur Einstellung eines Lagerspiels von koaxial drehbar zueinander gelagerten Bauteilen, mit den Merkmalen des Anspruchs 1, und das erfindungsgemäße Verfahren zur Einstellung eines Lagerspiels von koaxial drehbar zueinander gelagerten Bauteilen, mit den Merkmalen des Anspruchs 10, haben demgegenüber den Vorteil, dass die Vorrichtung zur Einstellung eines Lagerspiels von koaxial drehbar zueinander gelagerten Bauteilen, die über mindestens zwei mit axialem Abstand zueinander angeordneten Lagern (z.B. Wälzlager) drehbar miteinander verbunden sind, wobei ein Bauteil von einer Aufnahme, beispielsweise einem Gehäuse, Gestell, Fahrzeugrahmen oder einer Fahrzeuggabel, aufgenommen wird, eine Seite aufweist, um direkt oder indirekt koaxial mit einem der beiden Lager in Wirkverbindung stehen und einen axialen Druck auf eines der Lager ausüben zu können, wobei die Vorrichtung ein eine Öffnung aufweisendes erstes Teil, das eine Seite aufweist, und ein zweites Teil aufweist, die koaxial auf dem mit der Aufnahme verbundenen Bauteil angeordnet sind, wobei das zweite Teil eine Seite aufweist, die mindestens eine aus der Ebene der Stirnfläche herausragende Kontur aufweist, wobei das zweite Teil derart zumindest teilweise in die Öffnung des ersten Teils hineinragt, dass die Seite zumindest teilweise eine in der Öffnung befindliche Anschlagfläche des ersten Teils, die eine aus der Ebene der Anschlagfläche herausragende Kontur aufweist, berührt, wobei mindestens eine der Konturen mit einer Steigung versehen ist, auf der die mindestens eine gegenüberliegende Kontur gleitet, und an dem ersten Teil und dem zweiten Teil Mittel zur gegenseitigen radialen Verdrehung, infolge der sich jeweils das zweite Teil axial in Richtung des Lagers bewegt, und Mittel zur Arretierung des sich axial bewegenden zweiten Teils in der eingenommenen axialen Stellung vorgesehen sind, wodurch die Vorrichtung, durch die eine Spieleinstellung nicht nur in einem vormontierten Zustand, sondern auch bei funktionsbereiter, d.h. gebrauchsfertiger bzw. fahrbereiter Anordnung aller Bauteile möglich ist, sehr kompakt gebaut ist.

Nach einer vorteilhaften Ausgestaltung der erfindungsgemäßen Vorrichtung ist als Mittel zur gegenseitigen radialen Verdrehung des ersten Teils und des zweiten Teils eine Torsionsfeder vorgesehen, die einen erste Anschlag aufweist, der zumindest teilweise in einen am zweiten Teil angeordneten Aufnahme, die bevorzugt ein Schlitz ist, ragt, und die einen zweiten Anschlag aufweist, der zumindest teilweise in eine am ersten Teil angeordnete Ausnehmung ragt, und als Mittel zur Arretierung des zweiten Teils in die Ausnehmung ein Stellelement im Wesentlichen tangential bis leicht schräg hineinragt, das gegen den zweiten Anschlag bewegbar und arretierbar ist, oder weist als Mittel zur gegenseitigen radialen Verdrehung des ersten Teils und des zweiten Teils einer der beiden Teile ein axial aus seiner Stirnfläche herausragendes Anschlagelement und der andere Teil eine Ausnehmung auf, in die das Anschlagelement hineinragt, wobei in diese Ausnehmung ein Stellelement im Wesentlichen tangential bis leicht schräg hineinragt, das gegen das Anschlagelement bewegbar und arretierbar ist.

Bevorzugt weist der mit dem Wälzlager in Wirkverbindung stehende Teil das axial aus seiner Stirnfläche herausragende Anschlagelement auf. Dementsprechend ist der gegenüberliegend mit dem Widerlager in Wirkverbindung stehende Teil mit dem Stellmechanismus versehen. Hierzu weist das letztgenannte Teil die Ausnehmung auf, in die das Anschlagelement des mit dem Wälzlager in Wirkverbindung stehenden Teils hineinragt. Unabhängig davon, ob die Ausnehmung am ersten Teil oder am zweiten Teil angeordnet ist, ist die Ausnehmung bevorzugt in Umfangsrichtung des Teils erweitert, wobei in diese Ausnehmung das Stellelement im Wesentlichen tangential bis leicht schräg hineinragt, so dass es gegen das am anderen Teil angeordneten Anschlagelement bewegbar und arretierbar ist. Dadurch steht der mit dem Stellmechanismus ausgerüstete Teil weiter von dem Lager ab, so dass er zur Einstellung des Lagerspiels leichter für ein Werkzeug zugänglich ist.

Nach einer diesbezüglichen vorteilhaften Ausgestaltung der erfindungsgemäßen Vorrichtung weist beim Vorliegen einer Torsionsfeder die Torsionsfeder einen zumindest teilweise in Richtung Aufnahme gerichteten ersten Schenkel und einen zumindest teilweise in Richtung Aufnahme gerichteten zweiten Schenkel aufweist, wobei der erste Schenkel zumindest teilweise den ersten Anschlag bildet und/oder der zweite Schenkel zumindest teilweise den zweiten Anschlag bildet oder dass ist beim Vorliegen eines Anschlagelements das Anschlagelement ein Stift. Durch den Einsatz eines Stifts wird eine platzsparende und kompakte Bauweise erzielt. Bevorzugt ist der erste Schenkel zumindest teilweise nach innen gerichtet und der zweite Schenkel zumindest teilweise nach außen gerichtet.

Nach einer zusätzlichen vorteilhaften Ausgestaltung der erfindungsgemäßen Vorrichtung ist beim Vorliegen einer Torsionsfeder dessen zumindest teilweise den ersten Anschlag bildende erste Schenkel durch eine axiale Sicherung gesichert.

Nach einer zusätzlichen vorteilhaften Ausgestaltung der erfindungsgemäßen Vorrichtung ist die axiale Sicherung an der Seite des ersten Teils angeordnet und weist eine Erhebung auf, die zumindest teilweise in die Ausnehmung ragt, oder ist die axiale Sicherung eine in der Ausnehmung angeordnete Nut, in die der erste Schenkel zumindest teilweise hinein ragt, oder ist die axiale Sicherung ein an der Ausnehmung angeordneter Schlitz, durch den der erste Schenkel zumindest teilweise hindurch ragt.

Nach einer zusätzlichen vorteilhaften Ausgestaltung der erfindungsgemäßen Vorrichtung ist das Stellelement eine Stellschraube. Durch den Einsatz einer Stellschraube wird eine platzsparende und kompakte Bauweise erzielt. Bevorzugt ist die Stellschraube aus einem Polymerwerkstoff hergestellt.

Nach einer diesbezüglichen vorteilhaften Ausgestaltung der erfindungsgemäßen Vorrichtung weist die Stellschraube ein selbsthemmendes Gewinde auf. Bevorzugt ist die Stellschraube aus einem Polymerwerkstoff hergestellt, wodurch sie sich auf einfache Weise mit einem selbsthemmenden Gewinde ausbilden lässt, wodurch eine zusätzliche Sicherung der Stellschraube entfallen kann.

Nach einer zusätzlichen vorteilhaften Ausgestaltung der erfindungsgemäßen Vorrichtung besteht der erste Teil und/oder der zweite Teil aus einem Polymerwerkstoff. Dadurch ist die Einstellvorrichtung insbesondere durch Spritzgießen kostengünstig herstellbar.

Nach einer zusätzlichen vorteilhaften Ausgestaltung der erfindungsgemäße Vorrichtung ist der dem Lager abgewandte zweite Teil im montierten Zustand axial beweglich auf dem mit der Aufnahme verbundenen Bauteil angeordnet, wobei der zweite Teil eine Stirnfläche aufweist, die an der Aufnahme dieses Bauteils anliegt, wobei die Aufnahme für dieses zweite Teil ein Widerlager bildet.

Nach einer vorteilhaften Ausgestaltung des erfindungsgemäßen Verfahrens zur Einstellung eines Lagerspiels von koaxial drehbar zueinander gelagerten Bauteilen, die über mindestens zwei mit axialem Abstand zueinander angeordneten Lagern (z.B. Wälzlager) drehbar miteinander verbunden sind, mittels einer Vorrichtung zur Einstellung eines Lagerspiels von koaxial drehbar zueinander gelagerten Bauteilen, die über zwei mit axialem Abstand zueinander angeordneten Lagern drehbar miteinander verbunden sind, wobei ein Bauteil von einer Aufnahme, beispielsweise einem Gehäuse, Gestell, Fahrzeugrahmen oder einer Fahrzeuggabel, aufgenommen wird und wobei die Vorrichtung eine Seite aufweist, um direkt oder indirekt koaxial mit einem der beiden Lager in Wirkverbindung stehen und einen axialen Druck auf eines der Lager ausüben zu können, wobei die Vorrichtung ein eine Öffnung aufweisendes erstes Teil, das eine Seite aufweist, und ein zweites Teil aufweist, die koaxial auf dem mit der Aufnahme verbundenen Bauteil angeordnet sind, wobei das zweite Teil eine Seite aufweist, die mindestens eine aus der Ebene der Stirnfläche herausragende Kontur aufweist, wobei das zweite Teil derart zumindest teilweise in die Öffnung des ersten Teils hineinragt, dass die Seite zumindest teilweise eine in der Öffnung befindliche Anschlagfläche des ersten Teils, die eine aus der Ebene der Anschlagfläche herausragende Kontur aufweist, berührt, wobei mindestens eine der Konturen mit einer Steigung versehen ist, auf der die mindestens eine gegenüberliegende Kontur gleitet, und an dem ersten Teil und dem zweiten Teil Mittel zur gegenseitigen radialen Verdrehung, infolge der sich jeweils das zweite Teil axial in Richtung des Lagers bewegt, und Mittel zur Arretierung des sich axial bewegenden zweiten Teils in der eingenommenen axialen Stellung vorgesehen sind, wodurch nach mechanischer Einstellung des Lagerspiels durch eine Bedienperson aufgrund einer bei der Einstellung vorgesehenen Vorspannung eine gegenseitige relative radiale Verdrehung des ersten Teils und des zweiten Teils bewirkt wird, dass sich der zweite Teil axial bewegt, bewirkt die axiale Bewegung des zweiten Teils eine automatische Selbstnachstellung des Lagerspiels.

Nach einer zusätzlichen vorteilhaften Ausgestaltung des erfindungsgemäßen Verfahrens wird als Vorrichtung zur Einstellung eines Lagerspiels von koaxial drehbar zueinander gelagerten Bauteilen eine Vorrichtung, gemäß einem der Ansprüche 1 bis 9, eingesetzt.

Die erfindungsgemäße Vorrichtung zur Einstellung eines Lagerspiels von koaxial drehbar zueinander gelagerten Bauteilen, mit den Merkmalen des Anspruchs 13, und das erfindungsgemäße Verfahren zur Einstellung eines Lagerspiels von koaxial drehbar zueinander gelagerten Bauteilen, mit den Merkmalen des Anspruchs 17, haben demgegenüber den Vorteil, dass die Vorrichtung zur Einstellung eines Lagerspiels von koaxial drehbar zueinander gelagerten Bauteilen, die über mindestens zwei mit axialem Abstand zueinander angeordneten Lagern (z.B. Wälzlager) drehbar miteinander verbunden sind, wobei ein Bauteil von einer Aufnahme, beispielsweise einem Gehäuse, Gestell, Fahrzeugrahmen oder einer Fahrzeuggabel, aufgenommen wird, eine Seite aufweist, um direkt oder indirekt koaxial mit einem der beiden Lager in Wirkverbindung stehen und einen axialen Druck auf eines der Lager ausüben zu können, wobei die Vorrichtung, die eine Feder-Mutter, eine Torsionsfeder, die einen Schenkel und einen Schenkel aufweist, und einen Druckring aufweist, wobei die Feder-Mutter an einer Seite mindestens eine Öffnung zur zumindest teilweisen Aufnahme des Schenkels, der bevorzugt senkrecht oder nahezu senkrecht zur Seite der Feder-Mutter ausgerichtet ist, oder mindestens einen Mitnehmer zur Mitnahme des Schenkels, der bevorzugt parallel oder nahezu parallel zur Seite der Feder-Mutter ausgerichtet ist, aufweist und der Druckring an einer Seite mindestens eine Öffnung zur zumindest teilweisen Aufnahme des Schenkels, der bevorzugt senkrecht oder nahezu senkrecht zur Seite des Druckrings ausgerichtet ist, oder mindestens einen Mitnehmer zur Mitnahme des Schenkels, der bevorzugt parallel oder nahezu parallel zur Seite des Druckrings ausgerichtet ist, koaxial auf dem mit der Aufnahme verbundenen Bauteil angeordnet ist, wodurch die Vorrichtung, durch die eine Spieleinstellung nicht nur in einem vormontierten Zustand, sondern auch bei funktionsbereiter, d.h. gebrauchsfertiger bzw. fahrbereiter Anordnung aller Bauteile möglich ist, sehr kompakt gebaut ist.

Nach einer vorteilhaften Ausgestaltung der erfindungsgemäßen Vorrichtung weist der Druckring eine Innenfläche auf, die zumindest teilweise glatt ist und/oder die zumindest teilweise ein Gewinde auf.

Nach einer zusätzlichen vorteilhaften Ausgestaltung der erfindungsgemäßen Vorrichtung weist die Seite des Druckrings zumindest teilweise mindestens ein reibungserhöhendes Mittel auf und/oder weist die andere Seite des Druckrings zumindest teilweise mindestens ein reibungserhöhendes Mittel auf und/oder weist die Seite der Feder-Mutter zumindest teilweise mindestens ein reibungserhöhendes Mittel auf. Als reibungserhöhendes Mittel kann beispielsweise eine zumindest teilweise gummierte Oberfläche mindestens einer der Seiten oder eine zumindest teilweise rauhe Oberfläche mindestens einer der Seiten zum Einsatz kommen. Denkbar ist auch, dass zusätzlich oder alternativ an mindestens einer der Seiten ein reibungserhöhendes Mittel, insbesondere eine Keilsicherungsscheibe, angeordnet ist.

Nach einer zusätzlichen vorteilhaften Ausgestaltung der erfindungsgemäßen Vorrichtung ist mindestens eine Öffnung in einer an der Seite des Druckrings, der einen Mittelpunkt aufweist, angeordneten Nut angeordnet und/oder ist mindestens eine Öffnung in einer an der Seite der Feder-Mutter, die einen Mittelpunkt aufweist, angeordneten Nut angeordnet. Denkbar ist, dass eine an einer Seite angeordnete Nut, in der ein Schenkel der Torsionsfeder geführt werden kann, an der Seite einen um den Mittelpunkt verlaufenden geschlossenen oder einen um den Mittelpunkt verlaufenden nicht geschlossenen Kreis bildet. Insbesondere bei einem nicht geschlossenen Kreis, also einer Nut, die einen Kreisbogen beschreibt, ist es denkbar, dass die Öffnung an einem Nutende oder in der Mitte des Kreisbogens angeordnet ist und/oder die Nut eine in Richtung der Öffnung zunehmende Tiefe aufweist, wodurch der Schenkel automatisch in der Nut in Richtung der Öffnung geführt wird, um letztendlich zumindest teilweise von der Öffnung aufgenommen zu werden.

Nach einer vorteilhaften Ausgestaltung des erfindungsgemäßen Verfahrens zur Einstellung eines Lagerspiels von koaxial drehbar zueinander gelagerten Bauteilen, die über mindestens zwei mit axialem Abstand zueinander angeordneten Lagern drehbar miteinander verbunden sind, mittels einer Vorrichtung zur Einstellung eines Lagerspiels von koaxial drehbar zueinander gelagerten Bauteilen, die über zwei mit axialem Abstand zueinander angeordneten Lagern drehbar miteinander verbunden sind, wobei ein Bauteil von einer Aufnahme, beispielsweise einem Gehäuse, Gestell, Fahrzeugrahmen oder einer Fahrzeuggabel, aufgenommen wird und wobei die Vorrichtung eine Seite aufweist, um direkt oder indirekt koaxial mit einem der beiden Lager in Wirkverbindung stehen und einen axialen Druck auf eines der Lager ausüben zu können und wobei die Vorrichtung eine Seite aufweist, um direkt oder indirekt koaxial mit einem der beiden Lager in Wirkverbindung stehen und einen axialen Druck auf eines der Lager ausüben zu können, wobei die Vorrichtung, die eine Feder-Mutter, eine Torsionsfeder, die einen Schenkel und einen Schenkel aufweist, und einen Druckring aufweist, wobei die Feder-Mutter an einer Seite mindestens eine Öffnung zur zumindest teilweisen Aufnahme des Schenkels oder mindestens einen Mitnehmer zur Mitnahme des Schenkels aufweist und der Druckring an einer Seite mindestens eine Öffnung zur zumindest teilweisen Aufnahme des Schenkels oder mindestens einen Mitnehmer zur Mitnahme des Schenkels aufweist, koaxial auf dem mit der Aufnahme verbundenen Bauteil angeordnet ist, wodurch nach mechanischer Einstellung des Lagerspiels durch eine Bedienperson aufgrund einer bei der Einstellung vorgesehenen Vorspannung eine gegenseitige relative radiale Verdrehung der Feder-Mutter und des Druckrings bewirkt wird, dass sich der Druckring axial bewegen kann, bewirkt die axiale Bewegung des Druckrings eine automatische Selbstnachstellung des Lagerspiels.

Nach einer zusätzlichen vorteilhaften Ausgestaltung des erfindungsgemäßen Verfahrens wird als Vorrichtung zur Einstellung eines Lagerspiels von koaxial drehbar zueinander gelagerten Bauteilen eine Vorrichtung, gemäß einem der Ansprüche 13 bis 16, eingesetzt.

Besonders vorteilhaft sind die erfindungsgemäßen Vorrichtungen und die erfindungsgemäßen Verfahren anwendbar bei der Spieleinstellung der Lager von Fahrradnaben, nämlich Vorderradnaben oder Hinterradnaben. Die Spieleinstellung erfolgt bevorzugt an den bereits in die Gabel oder den Rahmen eingebauten und festgezogenen Rädern. Hier kommt auch der Vorteil, dass die Vorrichtung sehr klein, kompakt und leicht ist, zum Tragen, da sie auf der Achse zwischen einem Schenkel der Gabel oder des Rahmens und einem äußeren Wälzlager angeordnet ist und den Speichenflansch im Durchmesser nicht überragt.

Die Erfindung ist aber auch zur Einstellung von Lagerspielen von Steuersätzen oder an rotierenden Wellen, beispielsweise Spindeln von Werkzeugmaschinen, vorteilhaft einsetzbar.

Die Einstellvorrichtung des Lagerspiels kann an beliebiger Stelle zwischen dem Widerlager und einem der beiden Wälzlager positioniert werden. Dadurch ist eine gewisse konstruktive Freiheit bei der Lagergestaltung bzw. der Auslegung der kompletten Baugruppe gegeben. Vorteilhafterweise wird die Einstellvorrichtung an einer Stelle platziert, die in der montierten Baugruppe leicht zugänglich ist.

Weitere Vorteile und vorteilhafte Ausgestaltungen der Erfindung sind der nachfolgenden Beschreibung und den Zeichnungen entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Fig. 1: eine Seitenansicht einer Explosionsdarstellung diverser Bauteile einer erfindungsgemäßen Vorrichtung zur Einstellung eines Lagerspiels von koaxial drehbar zueinander gelagerten Bauteilen,
- Fig. 2: eine perspektivische Ansicht der Explosionsdarstellung einer erfindungsgemäßen Vorrichtung, gemäß Fig. 1, von oben,
- Fig. 3: eine perspektivische Ansicht einer Explosionsdarstellung einer erfindungsgemäßen Vorrichtung, gemäß Fig. 1, von unten,
- Fig. 4: eine Seitenansicht einer erfindungsgemäßen Vorrichtung im entspannten Zustand,
- Fig. 5: eine weitere Seitenansicht der erfindungsgemäßen Vorrichtung, gemäß Fig. 4,
- Fig. 6: eine Ansicht der erfindungsgemäßen Vorrichtung, gemäß Fig. 4, von oben,
- Fig. 7: eine perspektivische Ansicht der erfindungsgemäßen Vorrichtung, gemäß Fig. 4, von oben,
- Fig. 8: eine Ansicht der erfindungsgemäßen Vorrichtung, gemäß Fig. 4, von unten,
- Fig. 9: eine perspektivische Ansicht der erfindungsgemäßen Vorrichtung, gemäß Fig. 4, von unten,
- Fig. 10: eine Seitenansicht einer erfindungsgemäßen Vorrichtung im gespannten Zustand,
- Fig. 11: eine weitere Seitenansicht der erfindungsgemäßen Vorrichtung, gemäß Fig. 10,
- Fig. 12: eine Ansicht der erfindungsgemäßen Vorrichtung, gemäß Fig. 10, von oben,
- Fig. 13: eine perspektivische Ansicht der erfindungsgemäßen Vorrichtung, gemäß Fig. 10, von oben,
- Fig. 14: eine Ansicht der erfindungsgemäßen Vorrichtung, gemäß Fig. 10, von unten,
- Fig. 15: eine perspektivische Ansicht der erfindungsgemäßen Vorrichtung, gemäß Fig. 10, von unten,
- Fig. 16: eine Explosionsdarstellung eines Steuersatzes eines Fahrrades,
- Fig. 17: eine perspektivische Explosionsdarstellung des Steuersatzes, gemäß Fig. 16, von unten,
- Fig. 18: eine Seitenansicht des Steuersatzes, gemäß Fig. 16,
- Fig. 19: eine Schnittansicht des Steuersatzes, gemäß Fig. 16,
- Fig. 20: eine teilweise dargestellte Schnittansicht des Steuersatzes, gemäß Fig. 16,
- Fig. 21: eine Seitenansicht einer Explosionsdarstellung diverser Bauteile einer anderen Ausführungsform einer erfindungsgemäßen Vorrichtung zur Einstellung eines Lagerspiels von koaxial drehbar zueinander gelagerten Bauteilen,
- Fig. 22: eine perspektivische Ansicht einer Explosionsdarstellung einer erfindungsgemäßen Vorrichtung, gemäß Fig. 21, von oben,
- Fig. 23: eine perspektivische Ansicht einer Explosionsdarstellung einer erfindungsgemäßen Vorrichtung, gemäß Fig. 21, von unten,
- Fig. 24: eine Seitenansicht einer erfindungsgemäßen Vorrichtung im entspannten Zustand,
- Fig. 25: eine weitere Seitenansicht der erfindungsgemäßen Vorrichtung, gemäß Fig. 24,
- Fig. 26: eine Ansicht der erfindungsgemäßen Vorrichtung, gemäß Fig. 24, von oben,
- Fig. 27: eine perspektivische Ansicht der erfindungsgemäßen Vorrichtung, gemäß Fig. 24, von oben,
- Fig. 28: eine Ansicht der erfindungsgemäßen Vorrichtung, gemäß Fig. 24, von unten,
- Fig. 29: eine perspektivische Ansicht der erfindungsgemäßen Vorrichtung, gemäß Fig. 24, von unten,
- Fig. 30: eine Seitenansicht einer erfindungsgemäßen Vorrichtung im gespannten Zustand,
- Fig. 31: eine weitere Seitenansicht der erfindungsgemäßen Vorrichtung, gemäß Fig. 30,
- Fig. 32: eine Ansicht der erfindungsgemäßen Vorrichtung, gemäß Fig. 30, von oben,
- Fig. 33: eine perspektivische Ansicht der erfindungsgemäßen Vorrichtung, gemäß Fig. 30, von oben,
- Fig. 34: eine Ansicht der erfindungsgemäßen Vorrichtung, gemäß Fig. 30, von unten,
- Fig. 35: eine perspektivische Ansicht der erfindungsgemäßen Vorrichtung, gemäß Fig. 30, von unten,
- Fig. 36: eine Explosionsdarstellung eines Steuersatzes eines Fahrrades,
- Fig. 37: eine perspektivische Explosionsdarstellung des Steuersatzes, gemäß Fig. 36, von unten,
- Fig. 38: eine Seitenansicht des Steuersatzes, gemäß Fig. 36,
- Fig. 39: eine Schnittansicht des Steuersatzes, gemäß Fig. 36,
- Fig. 40: eine teilweise dargestellte Schnittansicht des Steuersatzes, gemäß Fig. 36,
- Fig. 41: eine Seitenansicht einer Explosionsdarstellung diverser Bauteile einer anderen Ausführungsform einer erfindungsgemäßen Vorrichtung zur Einstellung eines Lagerspiels von koaxial drehbar zueinander gelagerten Bauteilen,
- Fig. 42: eine perspektivische Ansicht einer Explosionsdarstellung einer erfindungsgemäßen Vorrichtung, gemäß Fig. 41, von unten,
- Fig. 43: eine perspektivische Ansicht einer erfindungsgemäßen Vorrichtung, gemäß Fig. 41, von oben,
- Fig. 44: eine perspektivische Ansicht einer erfindungsgemäßen Vorrichtung, gemäß Fig. 41, von unten,
- Fig. 45: eine Ansicht der erfindungsgemäßen Vorrichtung, gemäß Fig. 41, von oben, wobei das erste Teil nicht dargestellt ist,
- Fig. 46: eine Ansicht der erfindungsgemäßen Vorrichtung, gemäß Fig. 41, von unten, wobei das zweite Teil und der Stift nicht dargestellt sind,
- Fig. 47: eine Seitenansicht einer Explosionsdarstellung diverser Bauteile einer anderen Ausführungsform einer erfindungsgemäßen Vorrichtung zur Einstellung eines Lagerspiels von koaxial drehbar zueinander gelagerten Bauteilen,
- Fig. 48: eine perspektivische Ansicht einer Explosionsdarstellung einer erfindungsgemäßen Vorrichtung, gemäß Fig. 47, von unten,
- Fig. 49: eine perspektivische Ansicht einer erfindungsgemäßen Vorrichtung, gemäß Fig. 47, von oben,
- Fig. 50: eine perspektivische Ansicht einer erfindungsgemäßen Vorrichtung, gemäß Fig. 47, von unten,
- Fig. 51: eine Ansicht der erfindungsgemäßen Vorrichtung, gemäß Fig. 47, von oben, wobei das erste Teil nicht dargestellt ist,
- Fig. 52: eine Ansicht der erfindungsgemäßen Vorrichtung, gemäß Fig. 47, von unten, wobei das zweite Teil nicht dargestellt ist,
- Fig. 53: eine Ansicht einer erfindungsgemäßen Vorrichtung, von oben,
- Fig. 54: eine Ansicht einer erfindungsgemäßen Vorrichtung, gemäß Fig. 53, von unten,
- Fig. 55: eine Seitenansicht der erfindungsgemäßen Vorrichtung, gemäß Fig. 53, in gespannten Zustand,
- Fig. 56: eine perspektivische Ansicht einer Explosionsdarstellung diverser Bauteile einer anderen Ausführungsform einer erfindungsgemäßen Vorrichtung zur Einstellung eines Lagerspiels von koaxial drehbar zueinander gelagerten Bauteilen, von unten
- Fig. 57: eine perspektivische Ansicht der erfindungsgemäßen Vorrichtung, gemäß Fig. 56, von unten,
- Fig. 58: eine weitere perspektivische Ansicht einer Explosionsdarstellung der erfindungsgemäßen Vorrichtung, gemäß Fig. 56, von unten,
- Fig. 59: eine perspektivische Ansicht der erfindungsgemäßen Vorrichtung, gemäß Fig. 58, von unten,
- Fig. 60: eine Ansicht der erfindungsgemäßen Vorrichtung, gemäß Fig. 57, von oben,
- Fig. 61: eine Ansicht der erfindungsgemäßen Vorrichtung, gemäß Fig. 57, von oben, wobei das zweite Teil nicht dargestellt ist,
- Fig. 62: eine Ansicht der erfindungsgemäßen Vorrichtung, gemäß Fig. 57, von unten,
- Fig. 63: eine Ansicht der erfindungsgemäßen Vorrichtung, gemäß Fig. 57, von oben, wobei das zweite Teil nicht dargestellt ist,
- Fig. 64: eine Seitenansicht einer Explosionsdarstellung der Bauteile einer Nabe, nämlich einer Vorderradnabe oder einer Hinterradnabe, bei der zur Lagerspieleinstellung eine andere Ausführungsform einer erfindungsgemäße Vorrichtung eingesetzt ist,
- Fig. 65: eine perspektivische Ansicht der Explosionsdarstellung, gemäß Fig. 64,
- Fig. 66: eine Seitenansicht einer zusammengesetzten Nabe, gemäß Fig. 64, im entspannten Zustand,
- Fig. 67: eine perspektivische Ansicht der zusammengesetzten Nabe, gemäß Fig. 66, im entspannten Zustand,
- Fig. 68: eine perspektivische Ansicht der zusammengesetzten Nabe, gemäß Fig. 66, im gespannten Zustand,
- Fig. 69: eine perspektivische Ansicht der zusammengesetzten Nabe, gemäß Fig. 68, im gespannten Zustand und
- Fig. 70: als eine schwarze Freihandlinie dargestellt den Kraftfluss zwischen den beiden Lagern.

### Beschreibung des Ausführungsbeispiels

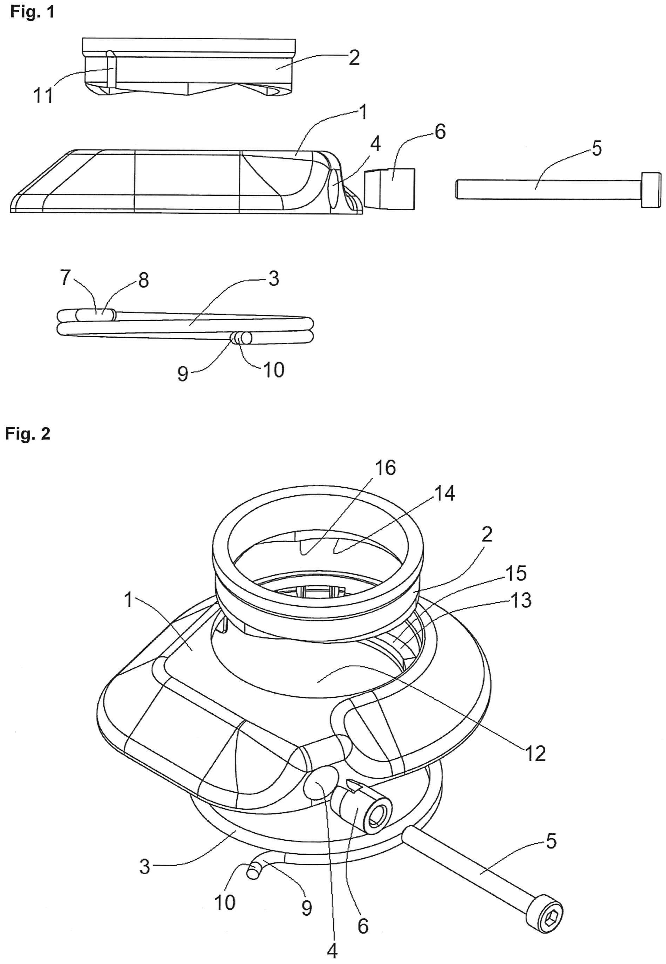

Fig. 1 zeigt eine Seitenansicht einer Explosionsdarstellung diverser Bauteile einer erfindungsgemäßen Vorrichtung zur Einstellung eines Lagerspiels von koaxial drehbar zueinander gelagerten Bauteilen. Insbesondere weist die erfindungsgemäße Vorrichtung ein erstes Teil 1, ein zweites Teil 2 und eine Torsionsfeder 3 auf. Das erste Teil 1 weist eine Bohrung 4 auf, in die, falls die Bohrung 4 kein Gewinde für eine Stellschraube 5 aufweist, ein Gewindeeinsatz 6 angeordnet werden kann oder eine selbstschneidende Schraube, die bevorzugt aus Metall ist, zum Einsatz kommt. Die Torsionsfeder 3 weist einen nach innen gerichteten ersten Schenkel 7, der zumindest teilweise einen ersten Anschlag 8 bildet, und einen nach außen gerichteten zweiten Schenkel 9, der zumindest teilweise einen zweiten Anschlag 10 bildet, auf. Im zusammengesetztem Zustand ragt der nach innen gerichteten ersten Schenkel 7 der Torsionsfeder 3, der zumindest teilweise den ersten Anschlag 8 bildet, mindestens teilweise in eine am zweiten Teil 2 angeordnete Aufnahme 11, die bevorzugt als Schlitz ausgestaltet ist.

Fig. 2 zeigt eine perspektivische Ansicht einer Explosionsdarstellung der erfindungsgemäßen Vorrichtung, gemäß Fig. 1, von oben. Das erste Teil 1 weist eine Öffnung 12 auf, in der eine Anschlagfläche 13 angeordnet ist. In die Öffnung 12 ist das zweite Teil 2, das eine Seite 14 aufweist soweit einführbar, bis die Seite 14 die Anschlagfläche 13 berührt. Die Anschlagfläche 13 weist eine aus der Ebene der Anschlagfläche 13 herausragende Kontur 15 auf. Die Seite 14 des zweiten Teils 2 weist eine aus der Ebene der Seite 14 herausragende Kontur 16 auf. Sowohl die Kontur 15 als auch die Kontur 16 sind mit einer Steigung versehen, sodass die sich gegenüberliegenden Konturen aufeinander gleiten können.

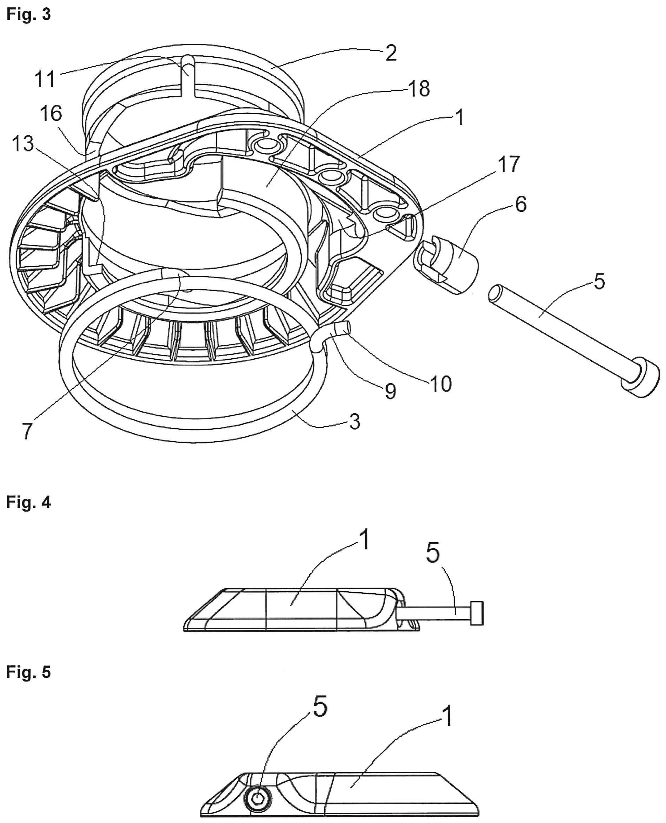

Fig. 3 zeigt eine perspektivische Ansicht einer Explosionsdarstellung einer erfindungsgemäßen Vorrichtung, gemäß Fig. 1, von unten. Im zusammengesetztem Zustand ragt der nach außen gerichteten zweite Schenkel 9 der Torsionsfeder 3, der zumindest teilweise den zweiten Anschlag 10 bildet, mindestens teilweise in eine am ersten Teil 1 angeordnete Ausnehmung 17. Zudem umschließt die Torsionsfeder 3 im zusammengesetzten Zustand eine Halterung 18.

Die Torsionsfeder 3 wird im entspannten Zustand von unten in das erste Teil 1 eingelegt. Der zweite Teil 2 wird von oben in das erste Teil 1 eingelegt. Dabei wird die Torsionsfeder 3 mit einem Ende in die Aufnahme 11, die bevorzugt ein Schlitz ist, im zweiten Teil 2 eingehängt. In diesem entspannten Zustand wird die erfindungsgemäße Vorrichtung in der Baugruppe montiert. Der zweite Schenkel 9 der Torsionsfeder 3 steht so über, dass die Stellschraube 5 beim Eindrehen in den im ersten Teil 1 befindlichen Gewindeeinsatz 6 diesen zweiten Schenkel 9 entlang einer Einschraubachse verschiebt. Dadurch wird die Torsionsfeder 3 um ihre Hochachse tordiert und vorgespannt. Damit ist eine Vorspannkraft aufgebracht. Das daraus resultierende Drehmoment wirkt auf das zweite Teil 2, das bei entstehendem Spiel um dessen Hochachse rotiert. Dabei sorgen die Rampen (Kontur 15, Kontur 16) an dem ersten Teil 1 und dem zweiten Teil 2 für eine zusätzliche Axialbewegung des zweiten Teils 2 und gleichen dieses Spiel aus.

Der Zusammenhang zwischen Vorspannkraft und Setzverhalten lässt sich wie folgt beschreiben: Ziel des Vorspannsystem ist es, das System (Steuersatzlagerung) mit einer axialen Vorspannkraft zu beaufschlagen und bei einem Setzverhalten der Bauteile eine Kompensation vorzunehmen. Das Setzverhalten ist eine im Laufe der Zeit auftretende Abnahme der der inneren Spannung des Materials, wenn eine Kraft auf ein Kunststoffbauteil wirkt. Die beiden physikalischen Effekte hierzu heißen Retardation und Relaxation, umgangssprachlich auch als "Kriechen" bezeichnet. Das Vorspannsystem muss also bei der Installation mit einer erhöhten Vorspannung beaufschlagt werden. Wird beispielsweise eine Torsionsfeder 3 bei der Installation um eine Vierteldrehung vorgespannt, also um 25/100 Umdrehungen, stellt sich beispielsweise eine axiale Vorspannung von 100 N ein. Durch ein im Laufe der Zeit auftretendes Setzverhalten der Bauteile im Steuersatz findet beispielsweise eine axiale Maßreduktion um 0,1 mm statt. Um diesen Weg zu kompensieren, muss die Feder 2/100 Umdrehungen nachrücken / nachdrehen. Die Vorspannung beträgt damit noch 23/100 Umdrehungen. Die axiale Vorspannung sinkt somit auf 92 N. Wenn also ein Betriebsbereich von 80 N bis 100 N angestrebt wird, ergibt sich ein Maß einer maximalen Kompensation des Setzverhaltens. Im dargelegten Zahlenbeispiel also ca. 0,25 mm.

Fig. 4 zeigt eine Seitenansicht einer erfindungsgemäßen Vorrichtung im entspannten Zustand.

Fig. 5 zeigt eine weitere Seitenansicht der erfindungsgemäßen Vorrichtung, gemäß Fig. 4.

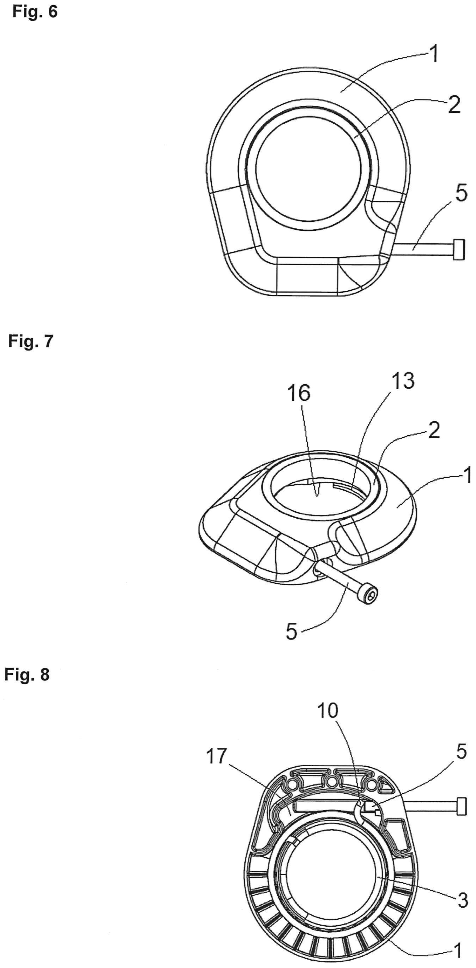

Fig. 6 zeigt eine Ansicht der erfindungsgemäßen Vorrichtung, gemäß Fig. 4, von oben.

Fig. 7 zeigt eine perspektivische Ansicht der erfindungsgemäßen Vorrichtung, gemäß Fig. 4, von oben.

Fig. 8 zeigt eine Ansicht der erfindungsgemäßen Vorrichtung, gemäß Fig. 4, von unten.

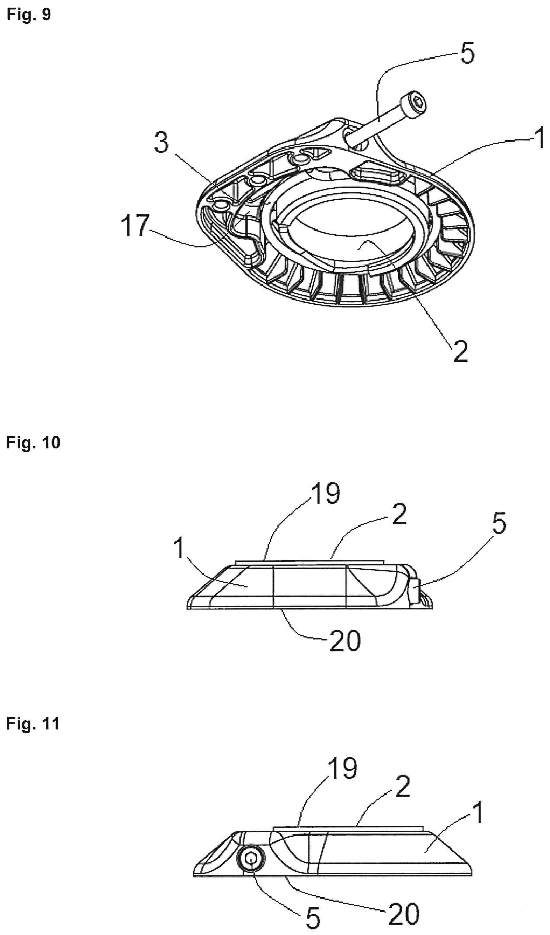

Fig. 9 zeigt eine perspektivische Ansicht der erfindungsgemäßen Vorrichtung, gemäß Fig. 4, von unten.

Fig. 10 zeigt eine Seitenansicht einer erfindungsgemäßen Vorrichtung im gespannten Zustand. Die erfindungsgemäße Vorrichtung weist am zweiten Teil 2 eine Seite 19 und am ersten Teil 1 eine Seite 20 auf.

Fig. 11 zeigt eine weitere Seitenansicht der erfindungsgemäßen Vorrichtung, gemäß Fig. 10.

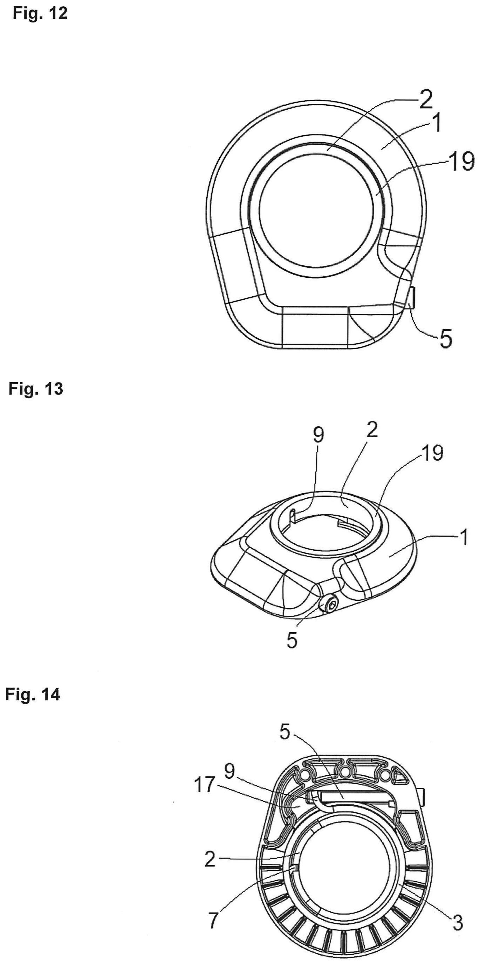

Fig. 12 zeigt eine Ansicht der erfindungsgemäßen Vorrichtung, gemäß Fig. 10, von oben.

Fig. 13 zeigt eine perspektivische Ansicht der erfindungsgemäßen Vorrichtung, gemäß Fig. 10, von oben.

Fig. 14 zeigt eine Ansicht der erfindungsgemäßen Vorrichtung, gemäß Fig. 10, von unten.

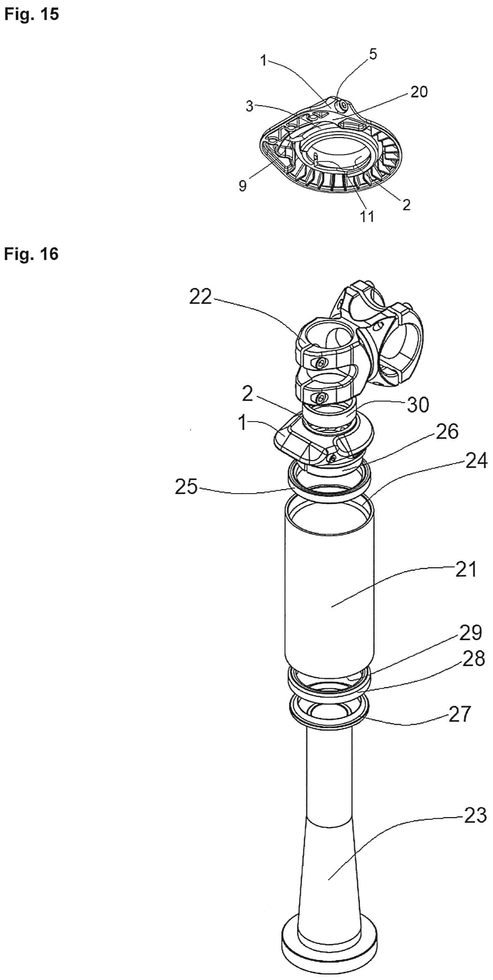

Fig. 15 zeigt eine perspektivische Ansicht der erfindungsgemäßen Vorrichtung, gemäß Fig. 10, von unten.

Fig. 16 zeigt eine Explosionsdarstellung eines Steuersatzes eines Fahrrades. Der Steuersatz ist in ein Steuerrohr 21 eines hier nicht dargestellten Rahmens eines Fahrzeuges eingebaut und besteht in bekannter Weise aus einer unterhalb eines Vorbaus 22 eines Lenkers des Fahrzeuges in dem Steuerrohr 21 angeordneten oberen und einer oberhalb der hier ebenfalls nicht dargestellten Gabel des Fahrzeugs, die einen Gabelschaft 23 aufweist, angeordneten unteren Steuerkopflagerung. Die obere Steuerkopflagerung weist eine obere Lagerschale 24 mit Lager 25 (oberes Wälzlager, Schrägkugellager) auf, das mittels eines Klemmrings 26 (Zentrierring) in dem Steuerrohr 21 montiert ist. Die untere Steuerkopflagerung besteht aus einem Boden 27, der auf den Gabelschaft 23 aufgeschlagen wird, einem auf dem Boden 27 aufliegendes unteres Lager 28 (unteres Wälzlager, Schrägkugellager) und einer unteren Lagerschale 29, in die das untere Lager 28 mit seinem Außenring eingepresst ist. Die untere Lagerschale 29 ist in die untere Öffnung des Steuerrohres 21 eingepresst. Der Gabelschaft 23 ist durch einen Innenring des unteren Lagers 28 und den Innenring des oberen Lagers 25 hindurchgeführt und ragt bis in den oberen Klemmring 26 hinein. In die obere Öffnung des Gabelschafts ist eine nicht dargestellte Spannkralle eingeschlagen, die das vom Fahrer auf den Lenker des Fahrzeugs aufgebrachte Lenk-Drehmoment über den Vorbau 22 auf die Gabel überträgt. Der Vorbau 22 ist mit einem Spacer 30 von der erfindungsgemäßen Vorrichtung beabstandet. Das Steuerrohr 21 ist mittels einer nicht dargestellten Cover (Spacer) abgedeckt. Der Vorbau 22 wird mittels eines nicht dargestellten Spanndeckels und einer nicht dargestellten Einstellschraube mit dem Gabelschaft 23 fest und dem Steuerrohr 21 spielfrei drehbar verbunden.

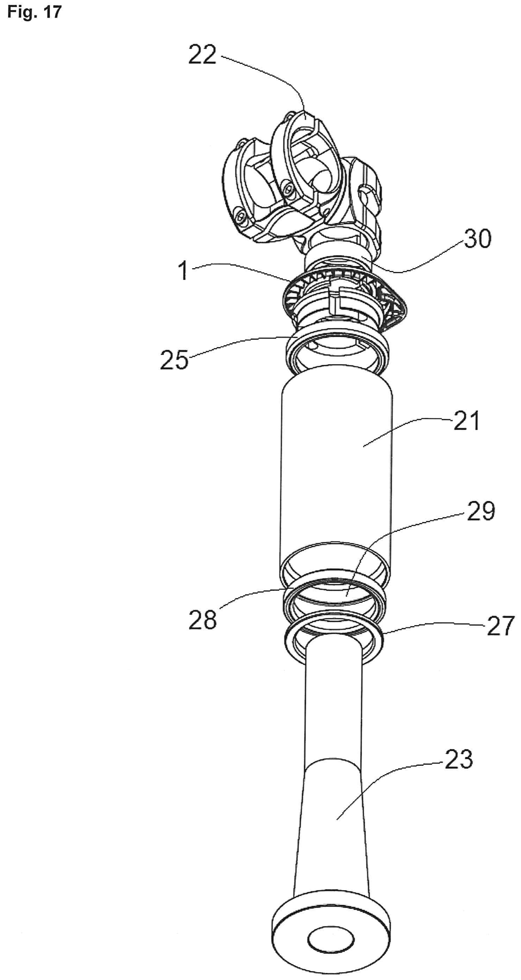

Fig. 17 zeigt eine perspektivische Explosionsdarstellung des Steuersatzes, gemäß Fig. 16, von unten. Im zusammengebauten Zustand steht die Seite 20 des ersten Teils 1 direkt koaxial in Wirkverbindung mit dem Lager 25, wodurch ein axialer Druck auf das Lager 25 ausgeübt wird.

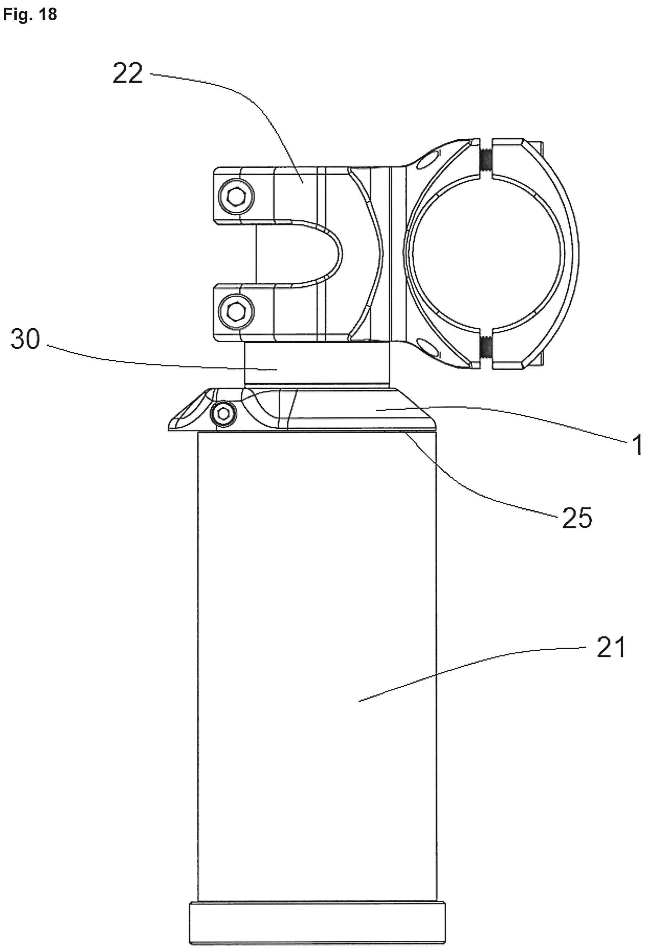

Fig. 18 zeigt eine Seitenansicht des Steuersatzes, gemäß Fig. 16.

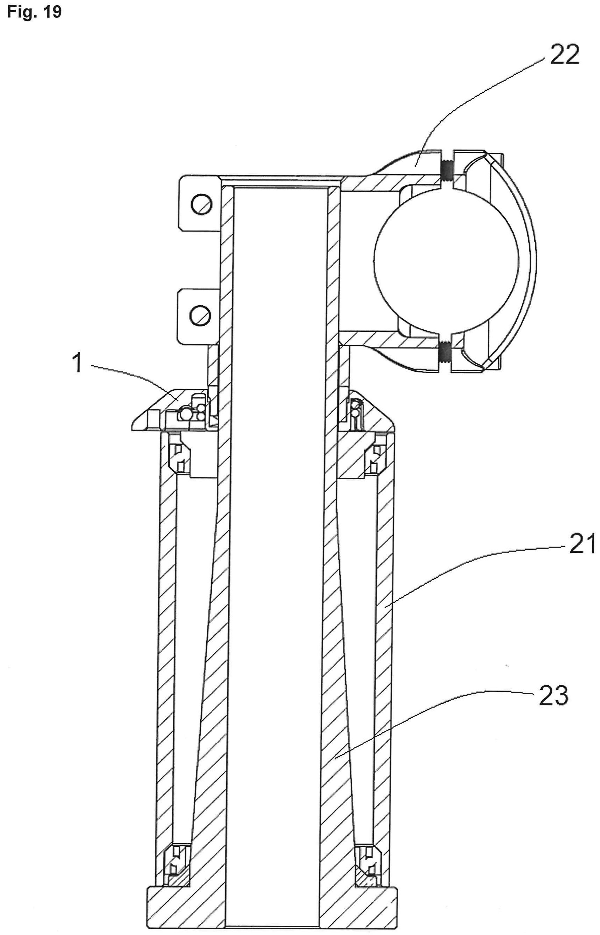

Fig. 19 zeigt eine Schnittansicht des Steuersatzes, gemäß Fig. 16.

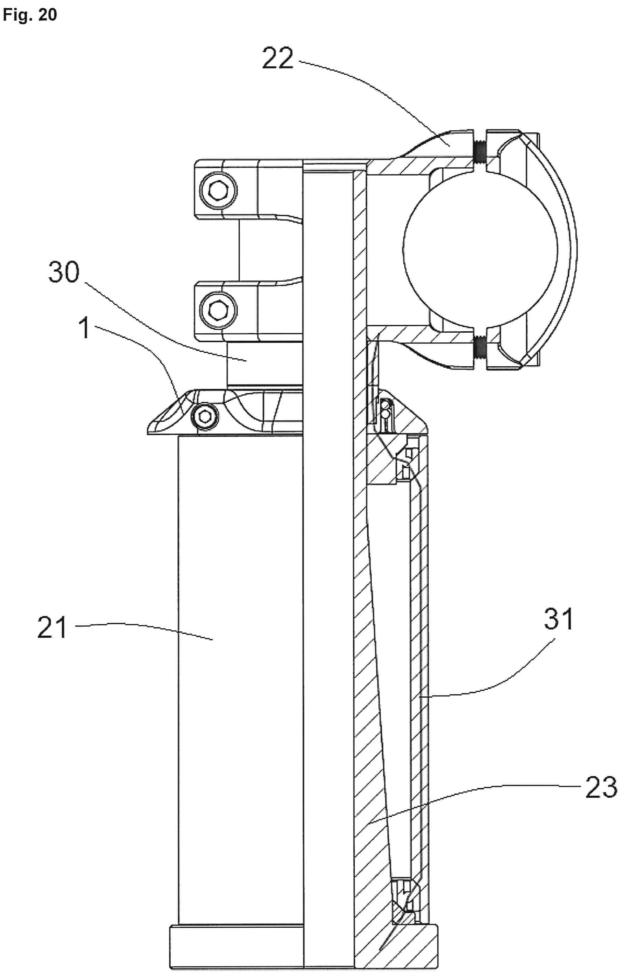

Fig. 20 zeigt eine teilweise dargestellte Schnittansicht des Steuersatzes, gemäß Fig. 16. Ein Kraftfluss 31 zwischen dem Lager 23 und dem Lager 26 ist als eine schwarze Freihandlinie dargestellt.

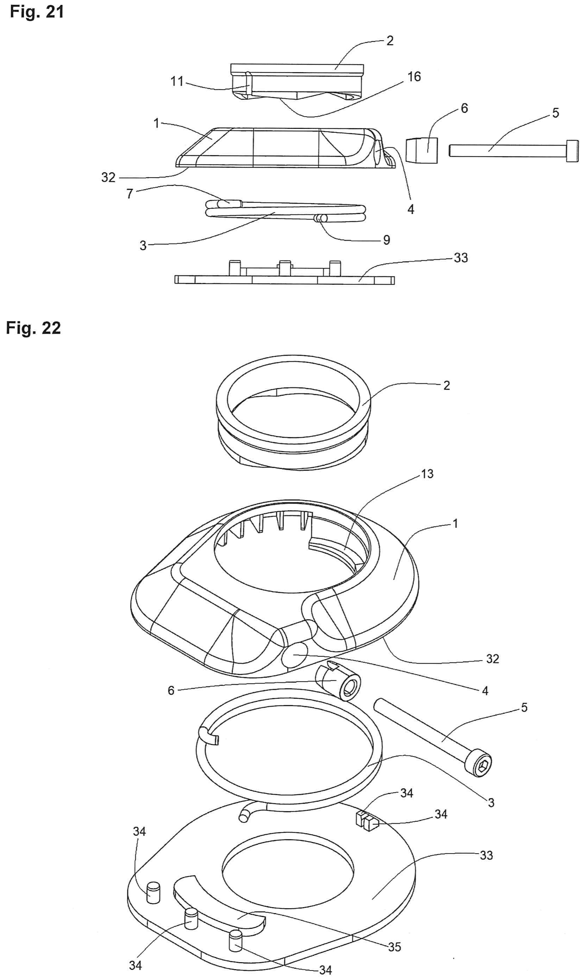

Fig. 21 zeigt eine Seitenansicht einer Explosionsdarstellung diverser Bauteile einer anderen Ausführungsform einer erfindungsgemäßen Vorrichtung zur Einstellung eines Lagerspiels von koaxial drehbar zueinander gelagerten Bauteilen. In diesem Ausführungsbeispiel weist das erste Teil 1 eine Unterseite 32 auf, an der eine Abdeckung 33 angeordnet werden kann.

Fig. 22 zeigt eine perspektivische Ansicht einer Explosionsdarstellung einer erfindungsgemäßen Vorrichtung, gemäß Fig. 21, von oben. Zur Anordnung der Abdeckung 33 an dem ersten Teil 1 weist die Abdeckung 33 gegebenenfalls unterschiedlich ausgestaltete Stifte 34, die in das erste Bauteil 1 eingeführt werden. Eine Federsicherung 35 ist derart ausgeformt, dass sie in die Ausnehmung 17 ragt, um den zweiten Schenkel 9 der Torsionsfeder 3 in dieser zu sichern.

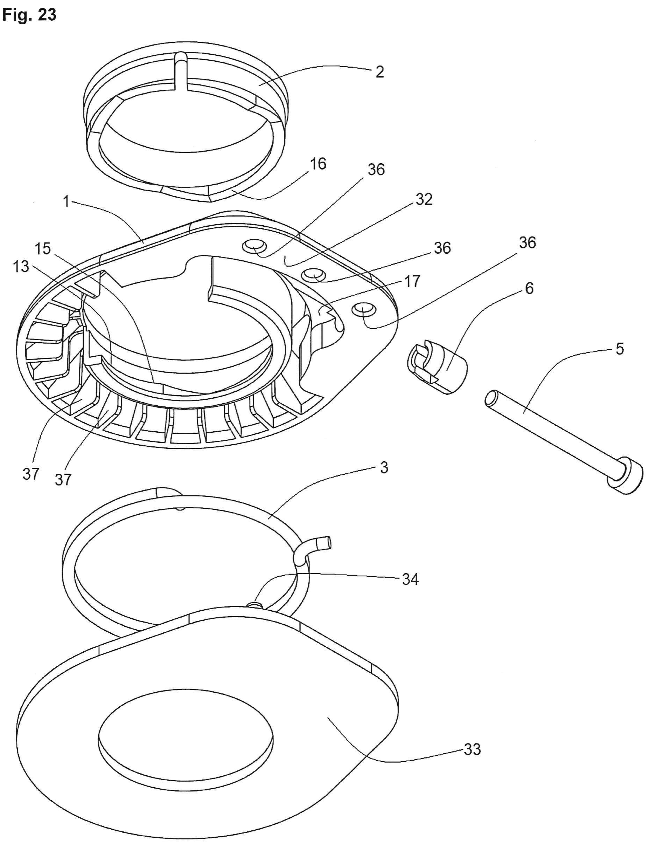

Fig. 23 zeigt eine perspektivische Ansicht einer Explosionsdarstellung einer erfindungsgemäßen Vorrichtung, gemäß Fig. 21, von unten. Die Stifte 34 sind in Öffnungen 36, die am ersten Teil 1 angeordnet sind, einführbar bzw. umgreifen Wände 37, die am ersten Teil 1 angeordnet sind.

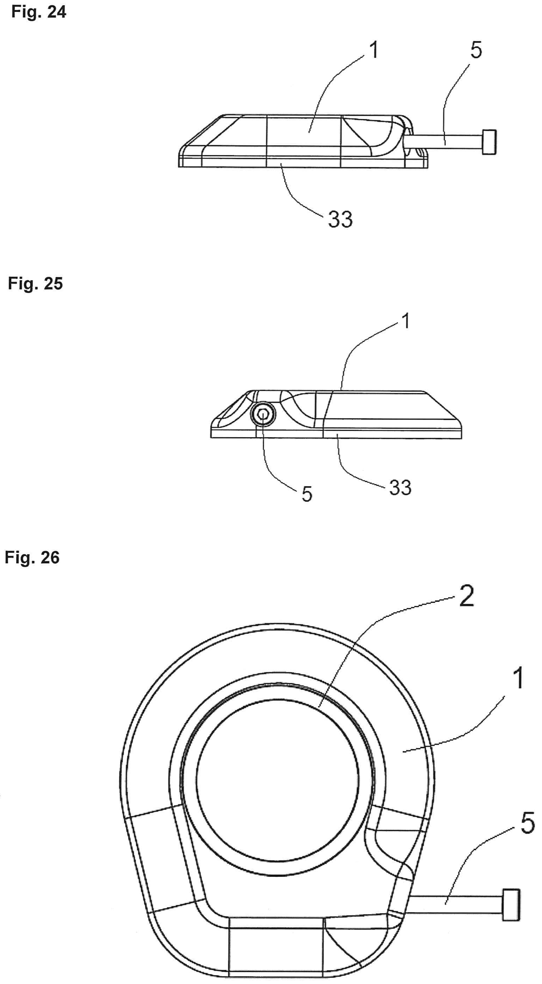

Fig. 24 zeigt eine Seitenansicht einer erfindungsgemäßen Vorrichtung im entspannten Zustand,

Fig. 25 zeigt eine weitere Seitenansicht der erfindungsgemäßen Vorrichtung, gemäß Fig. 24.

Fig. 26 zeigt eine Ansicht der erfindungsgemäßen Vorrichtung, gemäß Fig. 24, von oben.

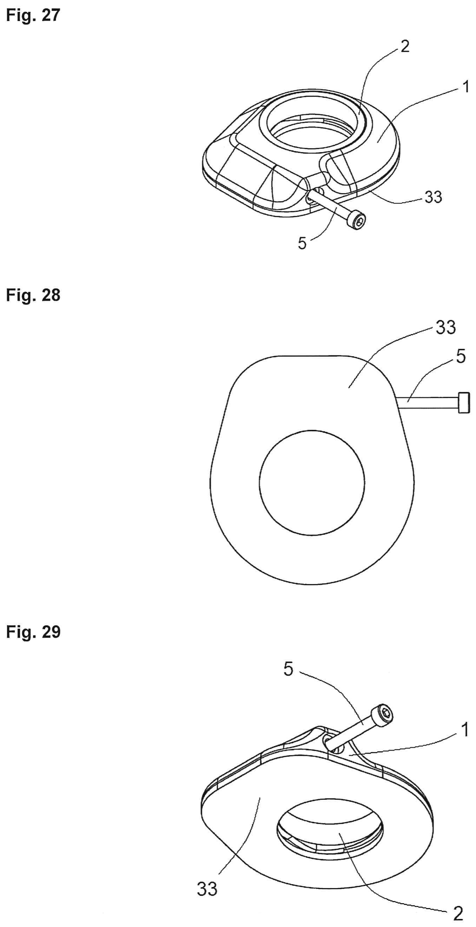

Fig. 27 zeigt eine perspektivische Ansicht der erfindungsgemäßen Vorrichtung, gemäß Fig. 24, von oben.

Fig. 28 zeigt eine Ansicht der erfindungsgemäßen Vorrichtung, gemäß Fig. 24, von unten.

Fig. 29 zeigt eine perspektivische Ansicht der erfindungsgemäßen Vorrichtung, gemäß Fig. 24, von unten.

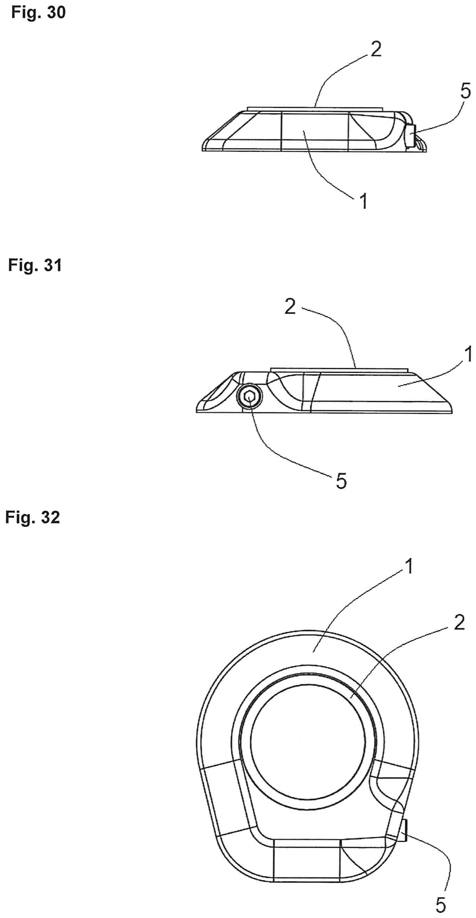

Fig. 30 zeigt eine Seitenansicht einer erfindungsgemäßen Vorrichtung im gespannten Zustand.

Fig. 31 zeigt eine weitere Seitenansicht der erfindungsgemäßen Vorrichtung, gemäß Fig. 30,

Fig. 32 zeigt eine Ansicht der erfindungsgemäßen Vorrichtung, gemäß Fig. 30, von oben,

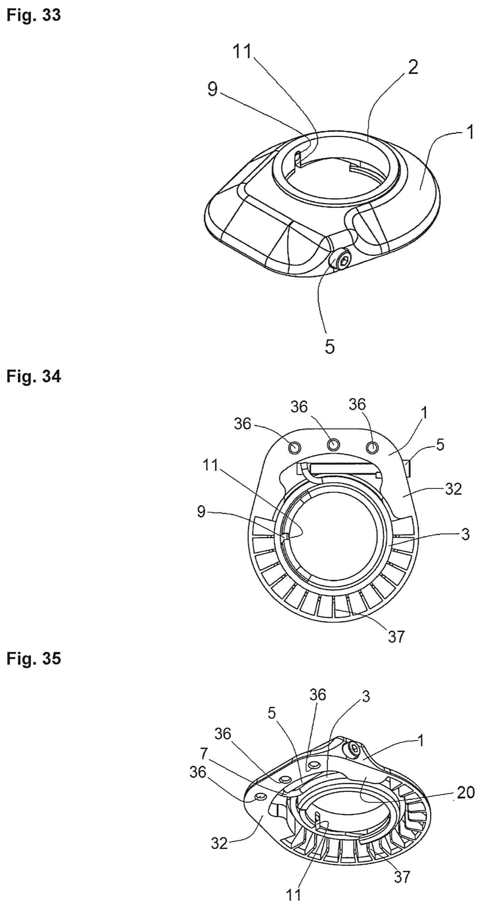

Fig. 33 zeigt eine perspektivische Ansicht der erfindungsgemäßen Vorrichtung, gemäß Fig. 30, von oben.

Fig. 34 zeigt eine Ansicht der erfindungsgemäßen Vorrichtung, gemäß Fig. 30, von unten.

Fig. 35 zeigt eine perspektivische Ansicht der erfindungsgemäßen Vorrichtung, gemäß Fig. 30, von unten.

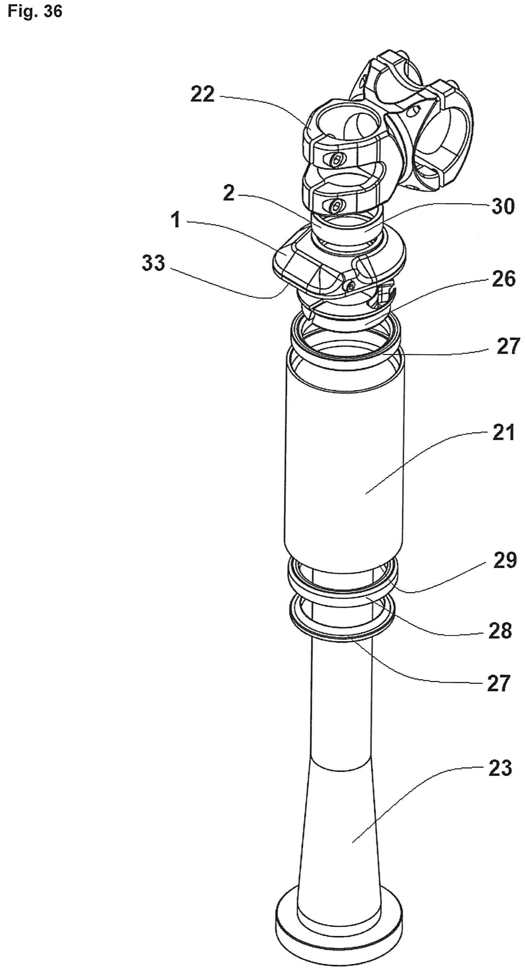

Fig. 36 zeigt eine Explosionsdarstellung eines Steuersatzes eines Fahrrades,

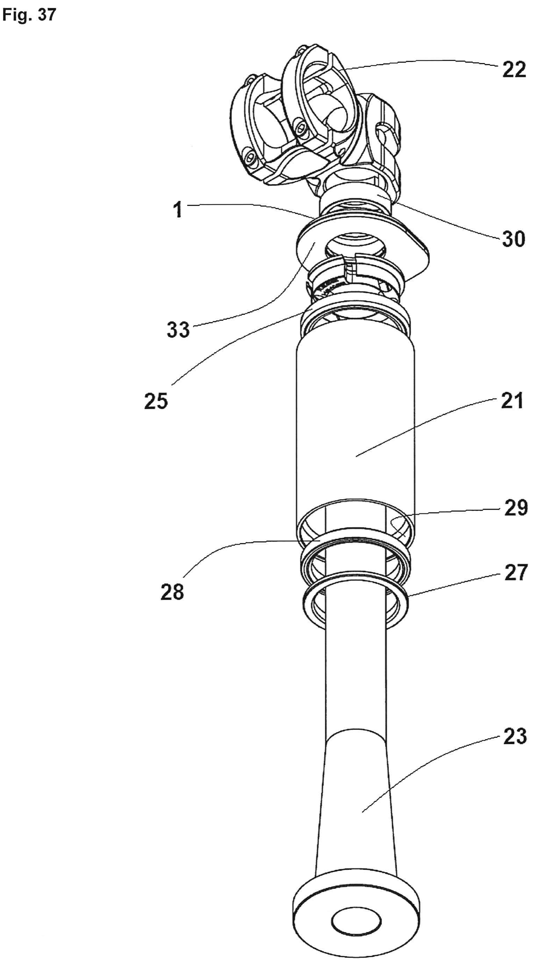

Fig. 37 zeigt eine perspektivische Explosionsdarstellung des Steuersatzes, gemäß Fig. 36, von unten.

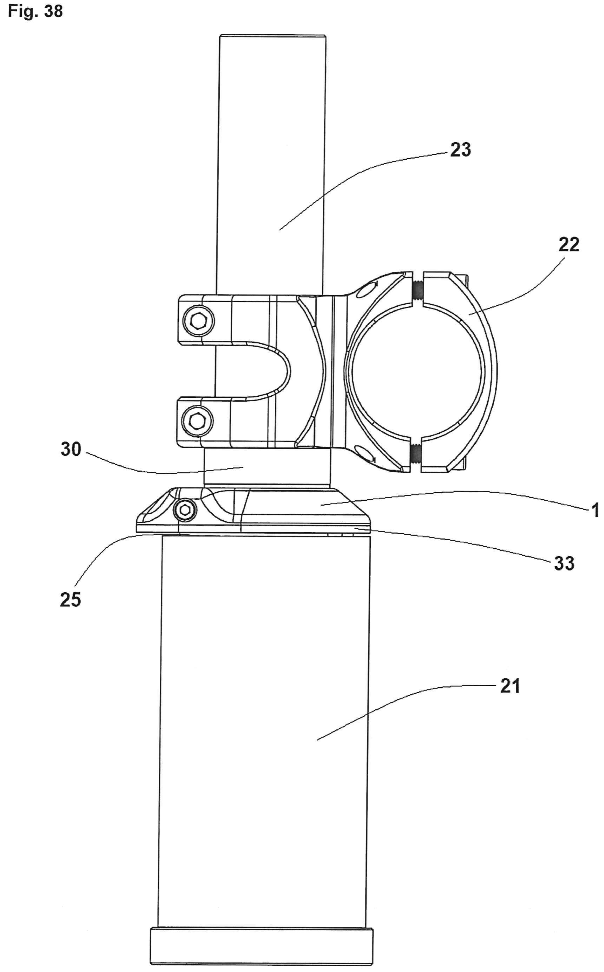

Fig. 38 zeigt eine Seitenansicht des Steuersatzes, gemäß Fig. 36.

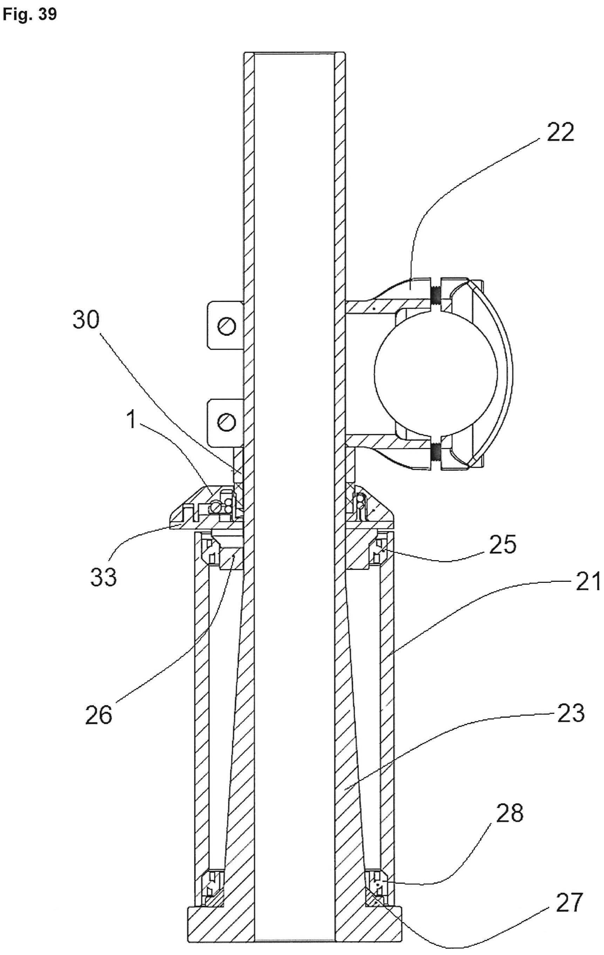

Fig. 39 zeigt eine Schnittansicht des Steuersatzes, gemäß Fig. 36.

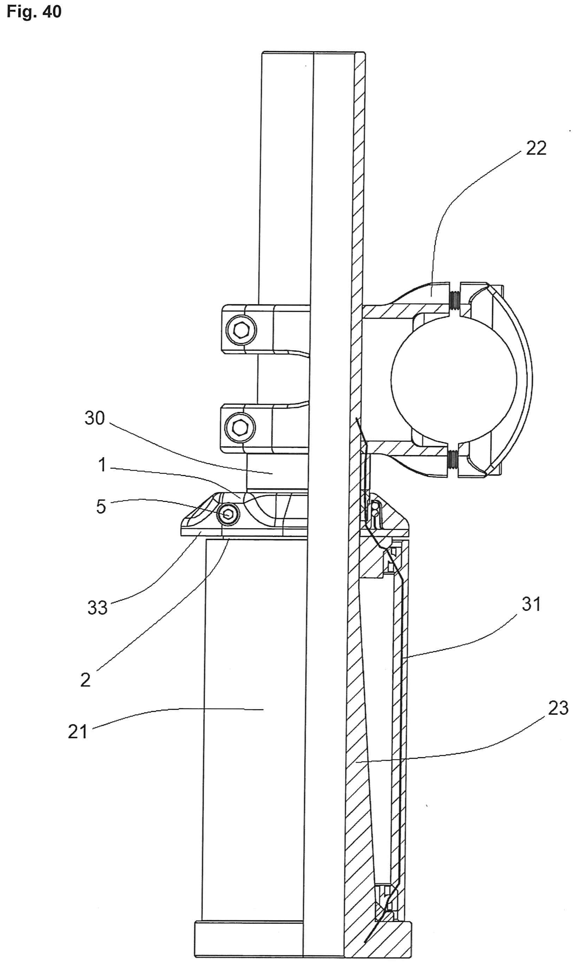

Fig. 40 zeigt eine teilweise dargestellte Schnittansicht des Steuersatzes, gemäß Fig. 36.

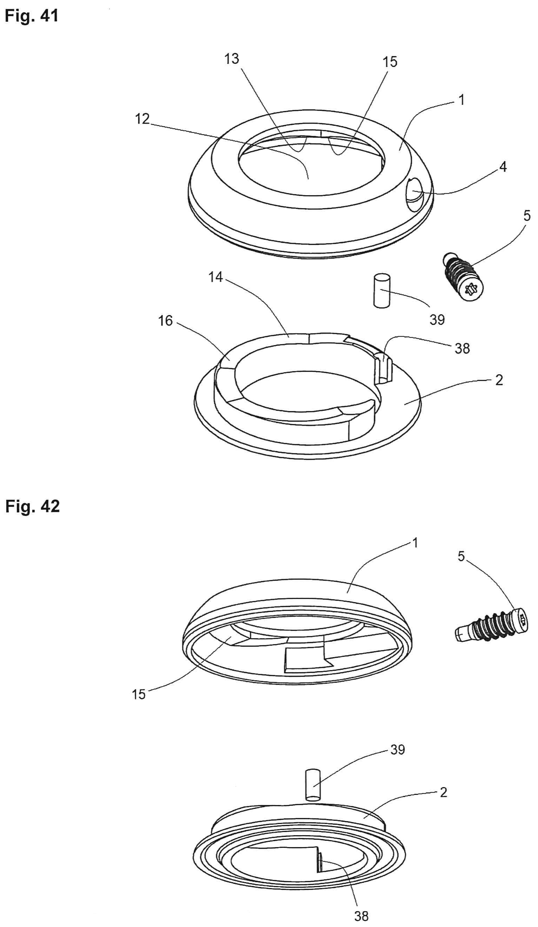

Fig. 41 zeigt eine Seitenansicht einer Explosionsdarstellung diverser Bauteile einer anderen Ausführungsform einer erfindungsgemäßen Vorrichtung zur Einstellung eines Lagerspiels von koaxial drehbar zueinander gelagerten Bauteilen. Bei dieser Ausführungsform weist das zweite Teil 2 eine Öffnung 38 auf, in die ein Stift 39 einsetzbar ist. Das erste Teil 1 weist eine Bohrung 4 auf, in die, falls die Bohrung 4 kein Gewinde für eine Stellschraube 5 aufweist, ein nicht dargestellter Gewindeeinsatz 6 angeordnet werden kann.

Das erste Teil 1 weist eine Öffnung 12 auf, in der eine Anschlagfläche 13 angeordnet ist. In die Öffnung 12 ist das zweite Teil 2, das eine Seite 14 aufweist soweit einführbar, bis die Seite 14 die Anschlagfläche 13 berührt. Die Anschlagfläche 13 weist eine aus der Ebene der Anschlagfläche 13 herausragende Kontur 15 auf. Die Seite 14 des zweiten Teils 2 weist eine aus der Ebene der Seite 14 herausragende Kontur 16 auf. Sowohl die Kontur 15 als auch die Kontur 16 sind mit einer Steigung versehen, sodass die sich gegenüberliegenden Konturen aufeinander gleiten können.

Nach dem Zusammenbauen wird die erfindungsgemäße Vorrichtung in einem entspannten Zustand in der Baugruppe montiert. Der in der Öffnung 38 positionierte Stift 39 wird zur Aufbringung einer Vorspannkraft beim Eindrehen der Stellschraube 5 in den ersten Teil 1 entlang einer Einschraubachse verschoben. Damit ist eine Vorspannkraft aufgebracht. Das daraus resultierende Drehmoment wirkt auf das zweite Teil 2, das bei entstehendem Spiel um dessen Hochachse rotiert. Dabei sorgen die Rampen (Kontur 15, Kontur 16) an dem ersten Teil 1 und dem zweiten Teil 2 für eine zusätzliche Axialbewegung des zweiten Teils 2 und gleichen dieses Spiel aus.

Fig. 42 zeigt eine perspektivische Ansicht einer Explosionsdarstellung einer erfindungsgemäßen Vorrichtung, gemäß Fig. 41, von unten.

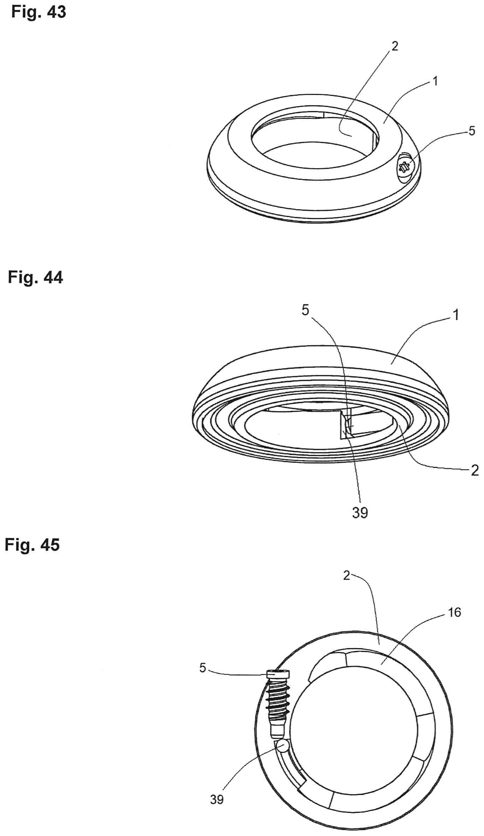

Fig. 43 zeigt eine perspektivische Ansicht einer erfindungsgemäßen Vorrichtung, gemäß Fig. 41, von oben.

Fig. 44 zeigt eine perspektivische Ansicht einer erfindungsgemäßen Vorrichtung, gemäß Fig. 41, von unten.

Fig. 45 zeigt eine Ansicht der erfindungsgemäßen Vorrichtung, gemäß Fig. 41, von oben, wobei das erste Teil 1 nicht dargestellt ist.

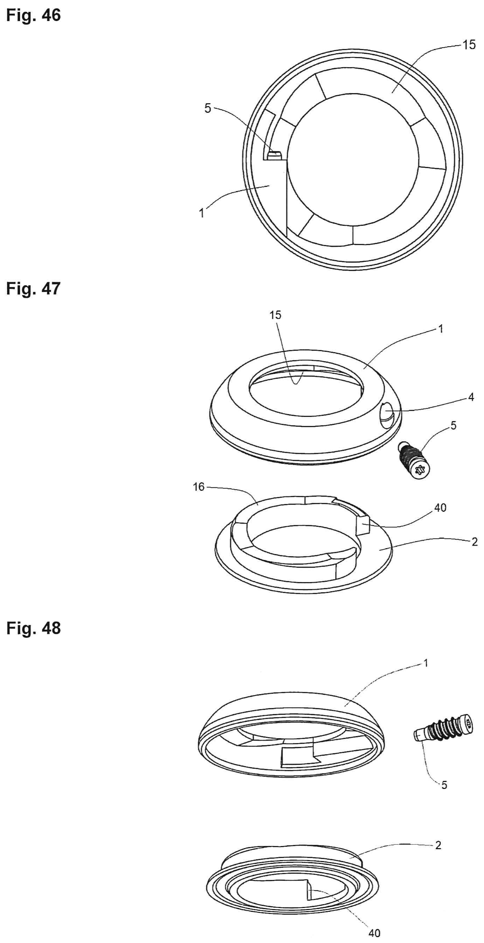

Fig. 46 zeigt eine Ansicht der erfindungsgemäßen Vorrichtung, gemäß Fig. 41, von unten, wobei das zweite Teil 2 und der Stift 39 nicht dargestellt sind.

Fig. 47 zeigt eine Seitenansicht einer Explosionsdarstellung diverser Bauteile einer anderen Ausführungsform einer erfindungsgemäßen Vorrichtung zur Einstellung eines Lagerspiels von koaxial drehbar zueinander gelagerten Bauteilen.

Fig. 48 zeigt eine perspektivische Ansicht einer Explosionsdarstellung einer erfindungsgemäßen Vorrichtung, gemäß Fig. 47, von unten. Im Gegensatz zu der in Fig. 41 dargestellten Ausführungsform weist diese Ausführungsform keinen Stift 39 auf, so dass zur Aufbringung der Vorspannkraft ein an dem zweiten Teil 2 befindlicher Anschlag 40 beim Eindrehen der Stellschraube 5 in den ersten Teil 1 entlang einer Einschraubachse verschoben wird.

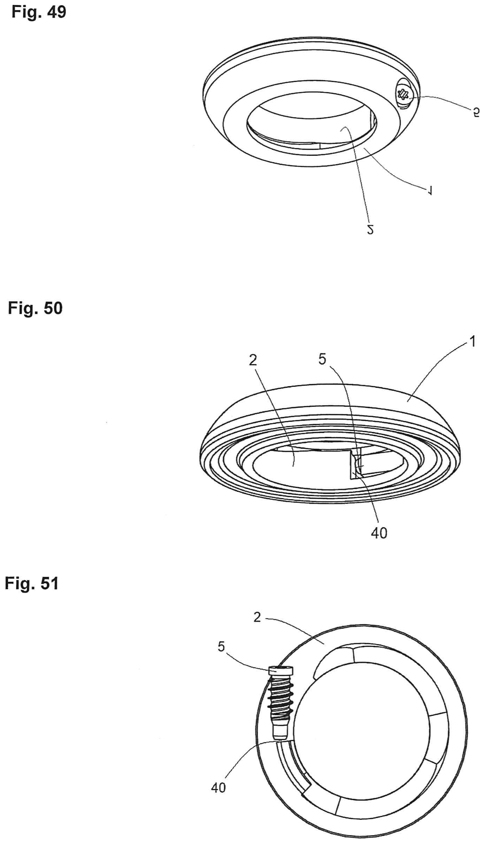

Fig. 49 zeigt eine perspektivische Ansicht einer erfindungsgemäßen Vorrichtung, gemäß Fig. 47, von oben.

Fig. 50 zeigt eine perspektivische Ansicht einer erfindungsgemäßen Vorrichtung, gemäß Fig. 47, von unten.

Fig. 51 zeigt eine Ansicht der erfindungsgemäßen Vorrichtung, gemäß Fig. 47, von oben, wobei das erste Teil 1 nicht dargestellt ist.

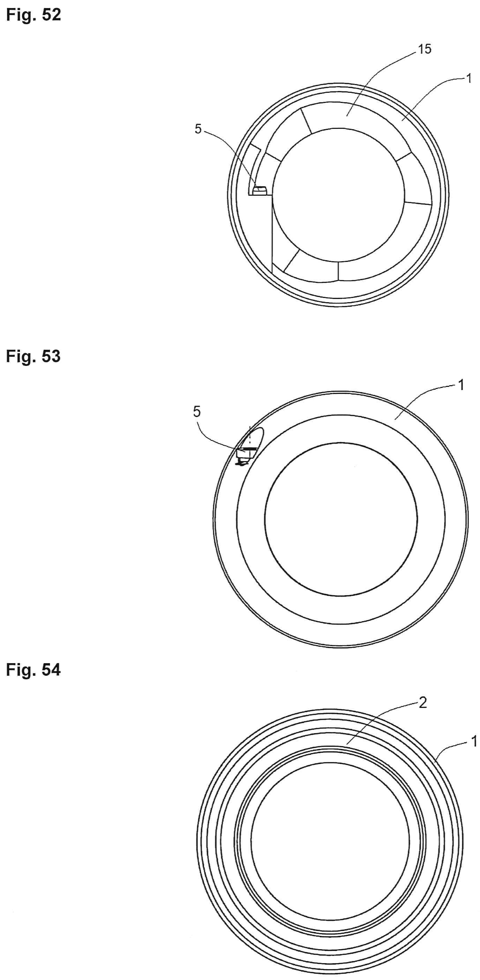

Fig. 52 zeigt eine Ansicht der erfindungsgemäßen Vorrichtung, gemäß Fig. 47, von unten, wobei das zweite Teil 2 nicht dargestellt ist.

Fig. 53 zeigt eine Ansicht einer erfindungsgemäßen Vorrichtung, von oben.

Fig. 54 zeigt eine Ansicht einer erfindungsgemäßen Vorrichtung, gemäß Fig. 53, von unten.

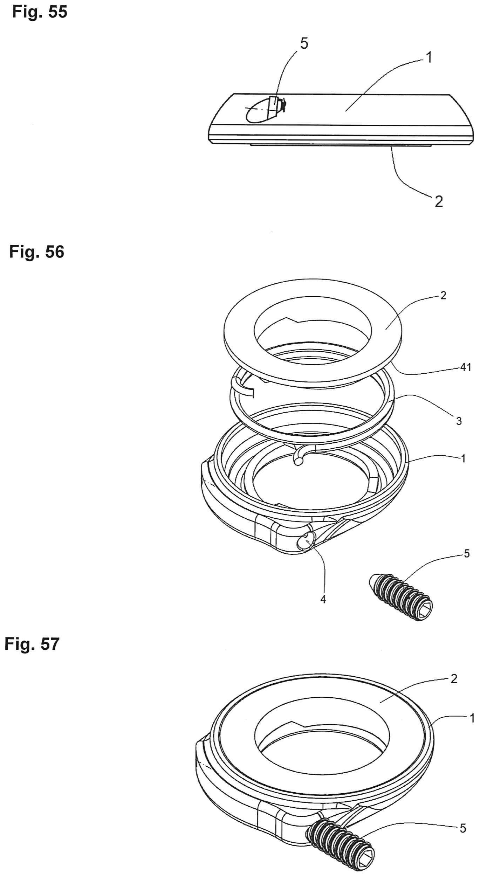

Fig. 55 zeigt eine Seitenansicht der erfindungsgemäßen Vorrichtung, gemäß Fig. 53, in gespannten Zustand.

Fig. 56 zeigt eine perspektivische Ansicht einer Explosionsdarstellung diverser Bauteile einer anderen Ausführungsform einer erfindungsgemäßen Vorrichtung zur Einstellung eines Lagerspiels von koaxial drehbar zueinander gelagerten Bauteilen, von unten. Die hier dargestellte erfindungsgemäße Vorrichtung ist bevorzugt bei Naben einsetzbar und entspricht vom grundsätzlichen Aufbau her den in Fig. 1 und Fig. 21 dargestellten Ausführungsformen. Der zweite Teil 2 weist einen breiteren Rand 41 auf, der die Funktion einer Federsicherung übernimmt, um die Torsionsfeder 3 zu sichern.

Fig. 57 zeigt eine perspektivische Ansicht der erfindungsgemäßen Vorrichtung, gemäß Fig. 56, von unten.

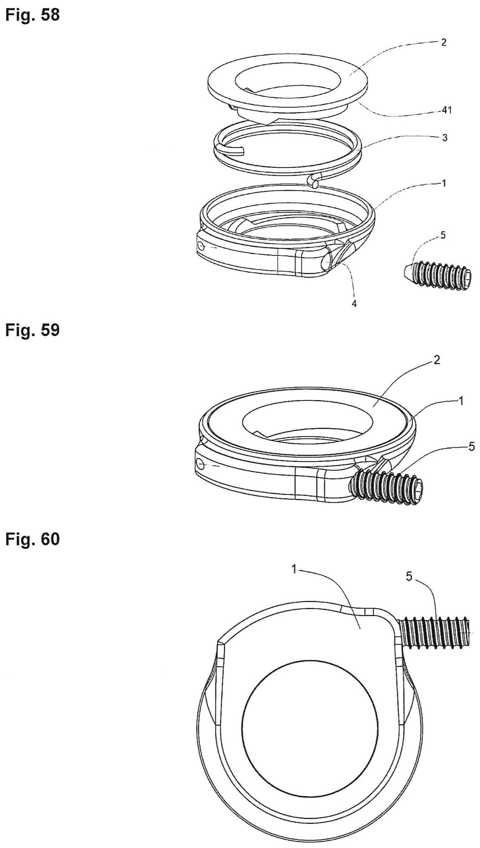

Fig. 58 zeigt eine weitere perspektivische Ansicht einer Explosionsdarstellung der erfindungsgemäßen Vorrichtung, gemäß Fig. 56, von unten.

Fig. 59 zeigt eine perspektivische Ansicht der erfindungsgemäßen Vorrichtung, gemäß Fig. 58, von unten.

Fig. 60 zeigt eine Ansicht der erfindungsgemäßen Vorrichtung, gemäß Fig. 57, von oben.

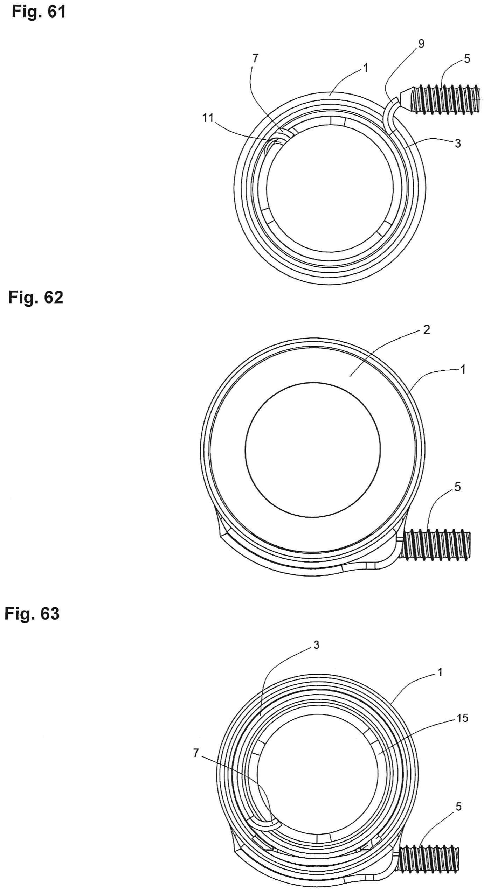

Fig. 61 zeigt eine Ansicht der erfindungsgemäßen Vorrichtung, gemäß Fig. 57, von oben, wobei das zweite Teil 2 nicht dargestellt ist.

Fig. 62 zeigt eine Ansicht der erfindungsgemäßen Vorrichtung, gemäß Fig. 57, von unten.

Fig. 63 zeigt eine Ansicht der erfindungsgemäßen Vorrichtung, gemäß Fig. 57, von oben, wobei das zweite Teil 2 nicht dargestellt ist,

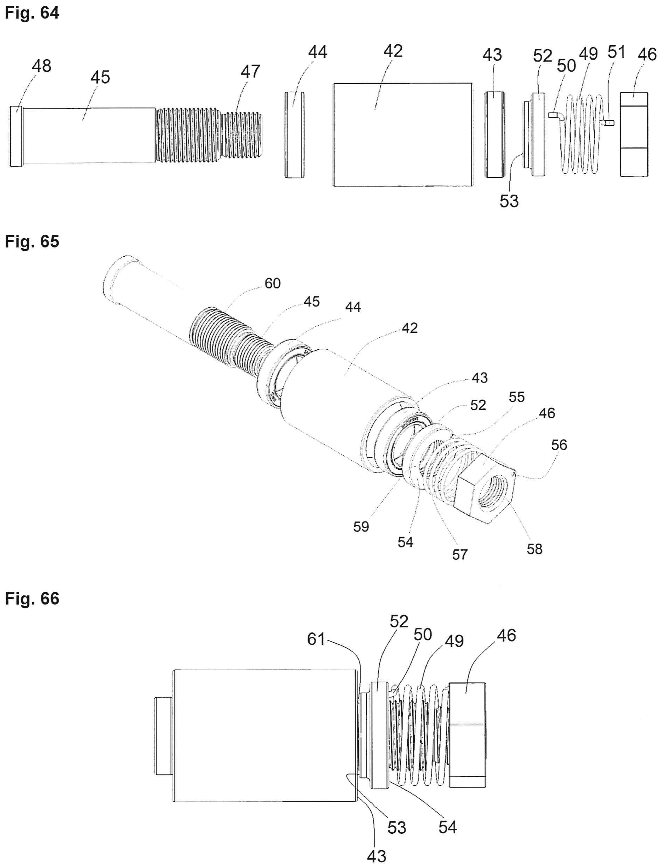

Fig. 64 zeigt eine Seitenansicht einer Explosionsdarstellung der Bauteile einer Nabe, nämlich einer Vorderradnabe oder einer Hinterradnabe, bei der zur Lagerspieleinstellung eine andere Ausführungsform einer erfindungsgemäßen Vorrichtung eingesetzt ist. Die Nabe weist einen Nabenkörper 42 und eine mittels zweier Lager (z.B. Wälzlager), nämlich dem Lager 43 und dem Lager 44, die bevorzugt Schrägkugellager sind, in dem Nabenkörper 42 gelagerte Hohlachse 45 auf. Im zusammengesetzten Zustand sind die Lager 43 und 44 in den Nabenkörper 42 eingepresst, während die Hohlachse 45 über einen Schiebesitz mit dem Innenring jedes Lagers 43 und 44 verbunden ist. Die Hohlachse 45 ist beiderseits mit einer Endkappe versehen, wobei die rechte Endkappe, die als Feder-Mutter 46 ausgestaltet ist, auf die Hohlachse 45, die hierfür ein Gewinde 47 aufweist, aufgeschraubt und die linke Endkappe 48 auf die Hohlachse 45 aufgepresst oder aufgeklebt ist. Die Feder-Mutter 46 ist Bestandteil der erfindungsgemäßen Vorrichtung zur Lagerspieleinstellung, zu der auch eine Torsionsfeder 49, die einen Schenkel 50 und einen Schenkel 51 aufweist, und ein Druckring 52, der eine den Lagern 43 und 44 zugewandte Seite 53 aufweist, zählt.

Zum Zwecke der Übersichtlichkeit wurden im Falle einer Vorderradnabe insbesondere auf die Darstellung eines am Nabenkörper 42 angeordneten rechten und eines linken Speichenflansches verzichtet. Im Falle einer Hinterradnabe würde die Nabe zusätzlich noch insbesondere einen Freilaufkörper, mit dem der Nabenkörper 42 drehfest verbunden ist, eine Zahnscheibe und ein rechtes und ein linkes Freilaufkörperlager aufweisen.

Der Druckring 52 besitzt ein Gewinde und wird auf die Hohlachse 45 aufgeschraubt, bis kein Spiel mehr im System vorhanden ist. Die Torsionsfeder 49 wird in der Öffnung 55 in den Druckring 52 und in der Öffnung 56 in die Feder-Mutter 46 eingehängt. Durch Aufschrauben der Feder-Mutter 46 auf die Hohlachse 45 wird das Federende der Torsionsfeder 49, welches in der Feder-Mutter 46 steckt, um die Hohlachse 45 rotiert, die Torsionsfeder 49 somit tordiert und vorgespannt. Damit ist eine Vorspannkraft aufgebracht. Die Feder-Mutter 46 ist auf der Hohlachse 45 gegen ein Verdrehen bzw. Lockern mit nicht dargestellten Mittel (z.B. Kontermutter, Schraubensicherung, Splint) zu sichern. Sobald Spiel im System auftritt, sorgt das am Druckring 52 anliegende Drehmoment aus der gespannten Torsionsfeder 49 dafür, dass sich der Druckring 52 automatisch nachstellt bzw. verdreht und somit ein spielfreies System sicherstellt.

Fig. 65 zeigt eine perspektivische Ansicht der Explosionsdarstellung, gemäß Fig. 64. Zur Aufnahme des Schenkels 50 der Torsionsfeder 49 weist der Druckring 52, der eine Seite 54, die der Feder-Mutter 46 zugewandt ist, aufweist und die bevorzugt zumindest teilweise glatt und/oder zumindest teilweise mit mindestens einem reibungserhöhende Mittel ausgestaltet sein kann, eine Öffnung 55, die als Durchgangsbohrung oder als Sackloch ausgestaltet sein kann, auf. Eine Öffnung 56, die an der Feder-Mutter 46 angeordnet ist und bevorzugt als Durchgangsbohrung durch die Feder-Mutter 46 hindurchgeht, wobei auch eine Ausgestaltung als Sackloch denkbar wäre, dient zur Aufnahme des Schenkels 51 der Torsionsfeder 49. Denkbar ist, dass die dem Druckring 52 zugewandte Seite 57 der Feder-Mutter 46 zumindest teilweise glatt und/oder zumindest teilweise mit mindestens einem reibungserhöhende Mittel ausgestaltet ist. Die Feder-Mutter 46 weist ein Gewinde 58 auf, mittels dem sie auf die Hohlachse 45, die hierfür das Gewinde 47 aufweist, aufgeschraubt werden kann. Der Druckring 52 weist an seiner Innenseite zumindest teilweise ein Gewinde 59 auf, mittels dem er auf die Hohlachse 45, die hierfür ein Gewinde 60 aufweist, aufgeschraubt werden kann. Denkbar ist auch, dass der Druckring 52 an seiner Innenseite kein Gewinde 59 aufweist, so dass er nur auf die Hohlachse 45, bei der dann auch das Gewinde 60 entfallen könnte, aufgeschoben wird.

Fig. 66 zeigt eine Seitenansicht einer zusammengesetzten Nabe, gemäß Fig. 64, im entspannten Zustand. Der Schenkel 50 der Torsionsfeder 49 ragt in die Öffnung 55 des Druckrings 52. Die Feder-Mutter 46 ist im entspannten Zustand noch nicht angezogen, so dass ein Spalt 61 zwischen dem Druckring 52 und dem in den Nabenkörper 42 eingepressten Lager 43 sichtbar ist.

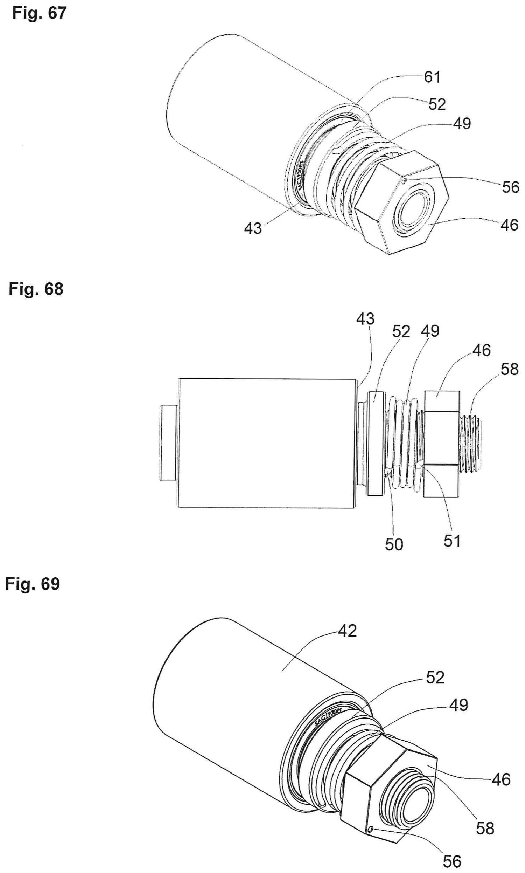

Fig. 67 zeigt eine perspektivische Ansicht der zusammengesetzten Nabe, gemäß Fig. 66, im entspannten Zustand. Der Schenkel 51 der Torsionsfeder 49 ragt in die Öffnung 56 der Feder-Mutter 46.

Fig. 68 zeigt eine perspektivische Ansicht der zusammengesetzten Nabe, gemäß Fig. 66, im gespannten Zustand. Der Schenkel 50 der Torsionsfeder 49 ragt in die Öffnung 55 des Druckrings 52. Der Schenkel 51 der Torsionsfeder 49 ragt in die Öffnung 56 der Feder-Mutter 46. Die Feder-Mutter 46 ist im gespannten Zustand angezogen, so dass der Druckring 52 der erfindungsgemäßen Vorrichtung mit der Seite 53 am Lager 43 anliegt. Eine nicht dargestellte Sicherung der Position der Feder-Mutter 46 kann auf herkömmliche Art und Weise erfolgen, beispielsweise mittels einer Kontermutter oder einem Splint.

Fig. 69 zeigt eine perspektivische Ansicht der zusammengesetzten Nabe, gemäß Fig. 68, im gespannten Zustand.

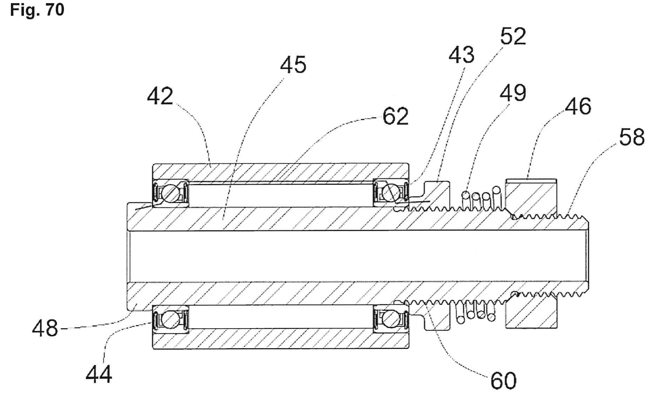

Fig. 70 zeigt als eine schwarze Freihandlinie dargestellt den Kraftfluss 62 zwischen den beiden Lagern 43 und 44.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszahlenliste

- 1: Erstes Teil
- 2: Zweites Teil
- 3: Torsionsfeder
- 4: Bohrung
- 5: Stellschraube
- 6: Gewindeeinsatz
- 7: Erster Schenkel
- 8: Erster Anschlag
- 9: Zweiter Schenkel
- 10: Zweiter Anschlag
- 11: Aufnahme
- 12: Öffnung
- 13: Anschlagfläche
- 14: Seite
- 15: Kontur
- 16: Kontur
- 17: Ausnehmung
- 18: Halterung
- 19: Seite
- 20: Seite
- 21: Steuerrohr
- 22: Vorbau
- 23: Gabelschaft
- 24: Lagerschale
- 25: Lager
- 26: Klemmring
- 27: Boden
- 28: Lager
- 29: Lagerschale
- 30: Spacer
- 31: Kraftfluss
- 31: Unterseite
- 32: Abdeckung
- 33: Stift
- 34: Federsicherung
- 35: Öffnung
- 36: Wand
- 37: Öffnung
- 38: Stift
- 39: Anschlag
- 40: Rand
- 41: Nabenkörper
- 42: Lager
- 43: Lager
- 44: Hohlachse
- 45: Feder-Mutter
- 46: Gewinde
- 47: Endkappe
- 48: Torsionsfeder
- 49: Schenkel
- 50: Schenkel
- 51: Druckring
- 52: Seite
- 53: Seite
- 54: Öffnung
- 55: Öffnung
- 56: Seite
- 57: Gewinde
- 58: Gewinde
- 59: Gewinde
- 60: Spalt
- 61: Kraftfluss

## Patentansprüche

1. Vorrichtung zur Einstellung eines Lagerspiels von koaxial drehbar zueinander gelagerten Bauteilen, die über mindestens zwei mit axialem Abstand zueinander angeordneten Lagern (25, 28) drehbar miteinander verbunden sind, wobei ein Bauteil von einer Aufnahme, beispielsweise einem Gehäuse, Gestell, Fahrzeugrahmen oder einer Fahrzeuggabel, aufgenommen wird und wobei die Vorrichtung eine Seite (19) oder eine Seite (20) aufweist, um direkt oder indirekt koaxial mit einem der beiden Lager (25, 28) in Wirkverbindung stehen und einen axialen Druck auf eines der Lager (25, 28) ausüben zu können, wobei die Vorrichtung ein eine Öffnung (12) aufweisendes erstes Teil (1), das die Seite (20) aufweist, und ein zweites Teil (2) aufweist, die koaxial auf dem mit der Aufnahme verbundenen Bauteil angeordnet sind,
**dadurch gekennzeichnet,**
**dass** das zweite Teil (2) eine Seite (14) aufweist, die mindestens eine aus der Ebene der Seite (14) herausragende Kontur (16) aufweist, wobei das zweite Teil (2) derart zumindest teilweise in die Öffnung (12) des ersten Teils (1) hineinragt, dass die Seite (14) zumindest teilweise eine in der Öffnung (12) befindliche Anschlagfläche (13) des ersten Teils (1), die eine aus der Ebene der Anschlagfläche (13) herausragende Kontur (15) aufweist, berührt, wobei mindestens eine der Konturen (15, 16) mit einer Steigung versehen ist, auf der die mindestens eine gegenüberliegende Kontur (15, 16) gleitet, und
an dem ersten Teil (1) und dem zweiten Teil (2) Mittel zur gegenseitigen radialen Verdrehung, infolge der sich jeweils das zweite Teil (2) axial in Richtung des Lagers (25, 28) bewegt, und Mittel zur Arretierung des sich axial bewegenden zweiten Teils (2) in der eingenommenen axialen Stellung vorgesehen sind.

2. Vorrichtung, nach Anspruch 1,
**dadurch gekennzeichnet,**
**dass** als Mittel zur gegenseitigen radialen Verdrehung des ersten Teils (1) und des zweiten Teils (2) eine Torsionsfeder (3) vorgesehen ist, die einen erste Anschlag (8) aufweist, der zumindest teilweise in einen am zweiten Teil (2) angeordneten Aufnahme (11) ragt, und die einen zweiten Anschlag (10) aufweist, der zumindest teilweise in eine am ersten Teil (1) angeordnete Ausnehmung (17) ragt, und als Mittel zur Arretierung des zweiten Teils (2) in die Ausnehmung (17) ein Stellelement im Wesentlichen tangential bis leicht schräg hineinragt, das gegen den zweiten Anschlag bewegbar und arretierbar ist,
oder
**dass** als Mittel zur gegenseitigen radialen Verdrehung des ersten Teils (1) und des zweiten Teils (2) einer der Teile (1, 2) ein axial aus seiner Stirnfläche herausragendes Anschlagelement und der andere Teil (1, 2) eine Ausnehmung (17) aufweist, in die das Anschlagelement hineinragt, wobei in diese Ausnehmung (17) ein Stellelement im Wesentlichen tangential bis leicht schräg hineinragt, das gegen das Anschlagelement bewegbar und arretierbar ist.

3. Vorrichtung, nach Anspruch 2,
**dadurch gekennzeichnet,**
**dass** beim Vorliegen einer Torsionsfeder (3) die Torsionsfeder (3) einen zumindest teilweise in Richtung Aufnahme (11) gerichteten ersten Schenkel (7) und einen zumindest teilweise in Richtung Aufnahme (17) gerichteten zweiten Schenkel (9) aufweist, wobei der erste Schenkel (7) zumindest teilweise den ersten Anschlag (8) bildet und/oder der zweite Schenkel (9) zumindest teilweise den zweiten Anschlag (10) bildet
oder
**dass** beim Vorliegen eines Anschlagelements das Anschlagelement ein Stift (34) ist.

4. Vorrichtung, nach Anspruch 3,
**dadurch gekennzeichnet,**
**dass** beim Vorliegen einer Torsionsfeder (3) dessen zumindest teilweise den ersten Anschlag (8) bildende erste Schenkel (7) durch eine axiale Sicherung gesichert ist.

5. Vorrichtung, nach Anspruch 4,
**dadurch gekennzeichnet,**
**dass** die axiale Sicherung an der Seite (20) des ersten Teils (1) angeordnet ist und eine Erhebung aufweist, die zumindest teilweise in die Ausnehmung (17) ragt, oder dass die axiale Sicherung eine in der Ausnehmung (17) angeordnete Nut ist, in die der erste Schenkel (7) zumindest teilweise hinein ragt, oder dass die axiale Sicherung ein an der Ausnehmung (17) angeordneter Schlitz ist, durch den der erste Schenkel (7) zumindest teilweise hindurch ragt.

6. Vorrichtung, nach einem der Ansprüche 2 bis 5,
**dadurch gekennzeichnet,**
**dass** das Stellelement eine Stellschraube (5) ist.

7. Vorrichtung, nach Anspruch 6,
**dadurch gekennzeichnet,**
**dass** die Stellschraube (5) ein selbsthemmendes Gewinde aufweist.

8. Vorrichtung, nach einem der vorhergehenden Ansprüche,
**dadurch gekennzeichnet,**
**dass** der erste Teil (1) und/oder der zweite Teil (2) aus einem Polymerwerkstoff besteht.

9. Vorrichtung, nach einem der vorhergehenden Ansprüche,
**dadurch gekennzeichnet,**
**dass** der dem Lager (25, 28) abgewandte zweite Teil (2) im montierten Zustand axial beweglich auf dem mit der Aufnahme verbundenen Bauteil angeordnet ist, wobei der zweite Teil (2) eine Stirnfläche (19) aufweist, die an der Aufnahme dieses Bauteils anliegt, wobei die Aufnahme für dieses zweite Teil (2) ein Widerlager bildet.

10. Verfahren zur Einstellung eines Lagerspiels von koaxial drehbar zueinander gelagerten Bauteilen, die über mindestens zwei mit axialem Abstand zueinander angeordneten Lagern (25, 28) drehbar miteinander verbunden sind, mittels einer Vorrichtung zur Einstellung eines Lagerspiels von koaxial drehbar zueinander gelagerten Bauteilen, die über zwei mit axialem Abstand zueinander angeordneten Lagern (25, 28) drehbar miteinander verbunden sind, wobei ein Bauteil von einer Aufnahme, beispielsweise einem Gehäuse, Gestell, Fahrzeugrahmen oder einer Fahrzeuggabel, aufgenommen wird und wobei die Vorrichtung eine Seite aufweist, um direkt oder indirekt koaxial mit einem der beiden Lager (25, 28) in Wirkverbindung stehen und einen axialen Druck auf eines der Lager (25, 28) ausüben zu können, wobei die Vorrichtung ein eine Öffnung (12) aufweisendes erstes Teil (1), das eine Seite (20) aufweist, und ein zweites Teil (2) aufweist, die koaxial auf dem mit der Aufnahme verbundenen Bauteil angeordnet sind,
**dadurch gekennzeichnet,**
**dass** das zweite Teil (2) eine Seite (14) aufweist, die mindestens eine aus der Ebene der Seite (14) herausragende Kontur (16) aufweist, wobei das zweite Teil (2) derart zumindest teilweise in die Öffnung (12) des ersten Teils (1) hineinragt, dass die Seite (14) zumindest teilweise eine in der Öffnung (12) befindliche Anschlagfläche (13) des ersten Teils (1), die eine aus der Ebene der Anschlagfläche (13) herausragende Kontur (15) aufweist, berührt, wobei mindestens eine der Konturen (15, 16) mit einer Steigung versehen ist, auf der die mindestens eine gegenüberliegende Kontur (15, 16) gleitet, und
an dem ersten Teil (1) und dem zweiten Teil (2) Mittel zur gegenseitigen radialen Verdrehung, infolge der sich jeweils das zweite Teil (2) axial in Richtung des Lagers (25, 28) bewegt, und Mittel zur Arretierung des sich axial bewegenden zweiten Teils (2) in der eingenommenen axialen Stellung vorgesehen sind, wodurch nach mechanischer Einstellung des Lagerspiels durch eine Bedienperson aufgrund einer bei der Einstellung vorgesehenen Vorspannung eine gegenseitige relative radiale Verdrehung des ersten Teils (1) und des zweiten Teils (2) bewirkt wird, dass sich der zweite Teil (2) axial bewegen kann.

11. Verfahren, nach Anspruch 10,
**dadurch gekennzeichnet,**
**dass** die axiale Bewegung des zweiten Teils (2) eine automatische Selbstnachstellung des Lagerspiels bewirkt.

12. Verfahren, nach Anspruch 10 oder 11,
**dadurch gekennzeichnet,**
**dass** als Vorrichtung zur Einstellung eines Lagerspiels von koaxial drehbar zueinander gelagerten Bauteilen eine Vorrichtung, gemäß einem der Ansprüche 1 bis 9, eingesetzt wird.

13. Vorrichtung zur Einstellung eines Lagerspiels von koaxial drehbar zueinander gelagerten Bauteilen, die über mindestens zwei mit axialem Abstand zueinander angeordneten Lagern (43, 44) drehbar miteinander verbunden sind, wobei ein Bauteil von einer Aufnahme, beispielsweise einem Gehäuse, Gestell, Fahrzeugrahmen oder einer Fahrzeuggabel, aufgenommen wird und wobei die Vorrichtung eine Seite (53) aufweist, um direkt oder indirekt koaxial mit einem der beiden Lager (43, 44) in Wirkverbindung stehen und einen axialen Druck auf eines der Lager (43, 44) ausüben zu können,
**dadurch gekennzeichnet,**
**dass** die Vorrichtung, die eine Feder-Mutter (46), eine Torsionsfeder (49), die einen Schenkel (50) und einen Schenkel (51) aufweist, und einen Druckring (52) aufweist, wobei die Feder-Mutter (46) an einer Seite (57) mindestens eine Öffnung (56) zur zumindest teilweisen Aufnahme des Schenkels (51) oder mindestens einen Mitnehmer zur Mitnahme des Schenkels (51) aufweist und der Druckring (52) an einer Seite (54) mindestens eine Öffnung (55) zur zumindest teilweisen Aufnahme des Schenkels (50) oder mindestens einen Mitnehmer zur Mitnahme des Schenkels (50) aufweist, koaxial auf dem mit der Aufnahme verbundenen Bauteil angeordnet ist.

14. Vorrichtung, nach Anspruch 13,
**dadurch gekennzeichnet,**
**dass** der Druckring (52) eine Innenfläche aufweist, die zumindest teilweise glatt ist und/oder die zumindest teilweise ein Gewinde (59) aufweist.

15. Vorrichtung, nach Anspruch 13 oder Anspruch 14,
**dadurch gekennzeichnet,**
**dass** die Seite (53) des Druckrings (52) zumindest teilweise mindestens ein reibungserhöhendes Mittel aufweist und/oder die Seite (54) des Druckrings (52) zumindest teilweise mindestens ein reibungserhöhendes Mittel aufweist und/oder die Seite (57) der Feder-Mutter (46) zumindest teilweise mindestens ein reibungserhöhendes Mittel aufweist.

16. Vorrichtung, nach einem der Ansprüche 13 bis 15,
**dadurch gekennzeichnet,**
**dass** mindestens eine Öffnung (55) in einer an der Seite (54) des Druckrings (52), der einen Mittelpunkt aufweist, angeordneten Nut angeordnet ist und/oder mindestens eine Öffnung (56) in einer an der Seite (57) der Feder-Mutter (46), die einen Mittelpunkt aufweist, angeordneten Nut angeordnet ist.

17. Verfahren zur Einstellung eines Lagerspiels von koaxial drehbar zueinander gelagerten Bauteilen, die über mindestens zwei mit axialem Abstand zueinander angeordneten Lagern (43, 44) drehbar miteinander verbunden sind, mittels einer Vorrichtung zur Einstellung eines Lagerspiels von koaxial drehbar zueinander gelagerten Bauteilen, die über zwei mit axialem Abstand zueinander angeordneten Lagern (43, 44) drehbar miteinander verbunden sind, wobei ein Bauteil von einer Aufnahme, beispielsweise einem Gehäuse, Gestell, Fahrzeugrahmen oder einer Fahrzeuggabel, aufgenommen wird und wobei die Vorrichtung eine Seite (53) aufweist, um direkt oder indirekt koaxial mit einem der beiden Lager (43, 44) in Wirkverbindung stehen und einen axialen Druck auf eines der Lager (43, 44) ausüben zu können,
**dadurch gekennzeichnet,**
**dass** die Vorrichtung, die eine Feder-Mutter (46), eine Torsionsfeder (49), die einen Schenkel (50) und einen Schenkel (51) aufweist, und einen Druckring (52) aufweist, wobei die Feder-Mutter (46) an einer Seite (57) mindestens eine Öffnung (56) zur zumindest teilweisen Aufnahme des Schenkels (51) oder mindestens einen Mitnehmer zur Mitnahme des Schenkels (51) aufweist und der Druckring (52) an einer Seite (54) mindestens eine Öffnung (55) zur zumindest teilweisen Aufnahme des Schenkels (50) oder mindestens einen Mitnehmer zur Mitnahme des Schenkels (50) aufweist, koaxial auf dem mit der Aufnahme verbundenen Bauteil angeordnet ist, wodurch nach mechanischer Einstellung des Lagerspiels durch eine Bedienperson aufgrund einer bei der Einstellung vorgesehenen Vorspannung eine gegenseitige relative radiale Verdrehung der Feder-Mutter (46) und des Druckrings (52) bewirkt wird, dass sich der Druckring (52) axial bewegen kann.

18. Verfahren, nach Anspruch 17,
**dadurch gekennzeichnet,**
**dass** die axiale Bewegung des Druckrings (52) eine automatische Selbstnachstellung des Lagerspiels bewirkt.

19. Verfahren, nach Anspruch 17 oder 18,
**dadurch gekennzeichnet,**
**dass** als Vorrichtung zur Einstellung eines Lagerspiels von koaxial drehbar zueinander gelagerten Bauteilen eine Vorrichtung, gemäß einem der Ansprüche 13 bis 16, eingesetzt wird.
